# EUROPEAN PATENT APPLICATION

(11) **EP 2 106 099 A1**
(43) Date of publication of application: **30.09.2009**
(21) Application number: 09002475.3
(22) Date of filing: 20.02.2009
(51) Int. Cl.: H04L 29/08, H04L 29/06

(54) **Authentication server, authentication system, and authentication method**

(30) Priority: 28.03.2008 JP 2008087139
(71) Applicant: Hitachi Ltd., Chiyoda-ku Tokyo 100-8280 (JP)
(72) Inventor: Yamamoto, Dan, Tokyo 100-8220 (JP); Kaji, Tadashi, Tokyo 100-8220 (JP); Fujishiro, Takahiro, Tokyo 100-8220 (JP); Irube, Shinichi, Tokyo 100-8220 (JP)
(74) Representative: Beetz & Partner

(57) **Abstract**

To provide a technology for enabling authentication according to a state of use of a device on a user side. When, on a communication device (10), a user requests a service providing server (16) to provide a service, an authentication server (17) acquires, from a presence server (19), presence information on a wireless terminal device (11), a softphone-equipped device (13), and a messenger-equipped device (15) held by the user requesting the service, selects an authentication method corresponding to the acquired presence information, and transmits a one-time password from an audio reproduction server (21) or an IM transmission server (22) to the wireless terminal device (11), the softphone-equipped device (13), or the messenger-equipped device (15).

## Description

### INCORPORATION BY REFERENCE

This application claims priority based on a Japanese patent application No. 2008-087139 filed on March 28 2008, the entire contents of which are incorporated herein by reference.

### BACKGROUND

The present invention relates to a technology of authenticating a user to be provided with services.

As the Internet has become popular, various services have become available for users over networks, such as distribution of video and audio, and publication of Web applications and Web sites. When service providers need to limit users receiving services, authenticity of a user requesting a service is verified, namely, user authentication is carried out before providing the service.

As the most common user authentication method, there is a method employing an identifier (ID: character string for uniquely identifying a user) and a password. In order to enhance security of the user authentication method employing the ID and the password, a technology described in Japanese Patent Laid-open Publication No. H10-341224 (referred to as Document 1 hereinafter) is known, for example.

According to the technology described in Document 1, when an authentication computer of a service provider receives an ID of a user or an ID of a data input device from a terminal 1 of the user via a line 1, the authentication computer generates a password to be used temporarily (one-time password), and transmits the password to a terminal 2 (such as a mailbox, a FAX receiving device, a wireless receiver, and a cellular phone) different from the terminal 1 via a line 2 different from the line 1. The user, upon receiving the password, transmits the password from the terminal 1 to the authentication computer via the line 1.

Then, the authentication computer recognizes authenticity of the user when the one-time password generated by itself and the one-time password received from the user coincide with each other.

### SUMMARY OF THE INVENTION

The technology described in Document 1 reduces, by employing the two lines, fear of impersonation by a malicious third party.

However, according to the technology disclosed in Document 1, depending on the state of use of the terminal 2 communicating via the line 2, execution of the user authentication method has to be given up.

For example, in a case in which a mobile communication network is used as the line 2, and a cellular phone is used as the terminal 2, when it is difficult or impossible for the cellular phone to receive a radio wave because the cellular phone is underground or the like, the user cannot use this cellular phone to receive a one-time password, and cannot carry out the authentication.

The present invention provides a technology of enabling authentication according to the state of use of a device on the user side.

In order to solve the above problem, the disclosed system acquires presence information of a device used by a user for authentication, and selects an authentication method according to the acquired presence information.

For example, according to the disclosed system, an authentication server which authenticates a user to be provided with a service includes:
a storage unit which stores authentication policy information for specifying an authentication method corresponding to presence information for specifying a state of a device used by the user; and
a control unit,
in which the control unit carries out:
processing of acquiring the presence information for specifying the state of the device used by the user;
processing of specifying the authentication method corresponding to the acquired presence information based on the authentication policy information; and
processing of carrying out authentication according to the specified authentication method.

As described above, according to the teaching herein, it is possible to carry out authentication according to the state of use of the devices on the user side.

These and other benefits are described throughout the present specification. A further understanding of the nature and advantages of the invention may be realized by reference to the remaining portions of the specification and the attached drawings.

### BRIEF DESCRIPTION OF THE DRAWINGS

FIG. 1 is a schematic diagram of an authentication system.
FIG. 2 is a schematic diagram of a communication device.
FIG. 3 is a schematic diagram of a computer.
FIG. 4 is a schematic diagram of a wireless terminal device.
FIG. 5 is a schematic diagram of a softphone-equipped device.
FIG. 6 is a schematic diagram of a messenger-equipped device.
FIG. 7 is a schematic diagram of a service providing server.
FIG. 8 is a schematic diagram of an authentication server.
FIG. 9 is a schematic diagram of an authentication policy table.
FIG. 10 is a schematic diagram of a script.
FIG. 11 is a schematic diagram of a script.
FIG. 12 is a schematic diagram of the script.
FIG. 13 is a schematic diagram of a presence server.
FIG. 14 is a schematic diagram of a presence information table.
FIG. 15 is a schematic diagram of a user information management server.
FIG. 16 is a schematic diagram of a user information table.
FIG. 17 is a schematic diagram of an audio reproduction server.
FIG. 18 is a schematic diagram of an IM transmission server.
FIG. 19 is a flowchart exemplifying processing carried out by the authentication server.
FIG. 20 is a flowchart exemplifying the processing carried out by the authentication server.
FIG. 21 is a schematic diagram of a body of a user authentication request message.
FIG. 22 is a schematic diagram of a body of a user information request message.
FIG. 23 is a schematic diagram of a body of a user information response message.
FIG. 24 is a schematic diagram of a presence information request message.
FIG. 25 is a schematic diagram of a presence information notification message.
FIG. 26 is a schematic diagram of an acquired presence information table.
FIG. 27 is a schematic diagram of a body of a user authentication response message.
FIG. 28 is a schematic diagram of the body of the user authentication response message.
FIG. 29 is a sequence exemplifying processing carried out when the authentication system carries out authentication.
FIG. 30 is a sequence exemplifying the processing carried out when the authentication system carries out the authentication.

### DETAILED DESCRIPTION OF THE EMBODIMENTS

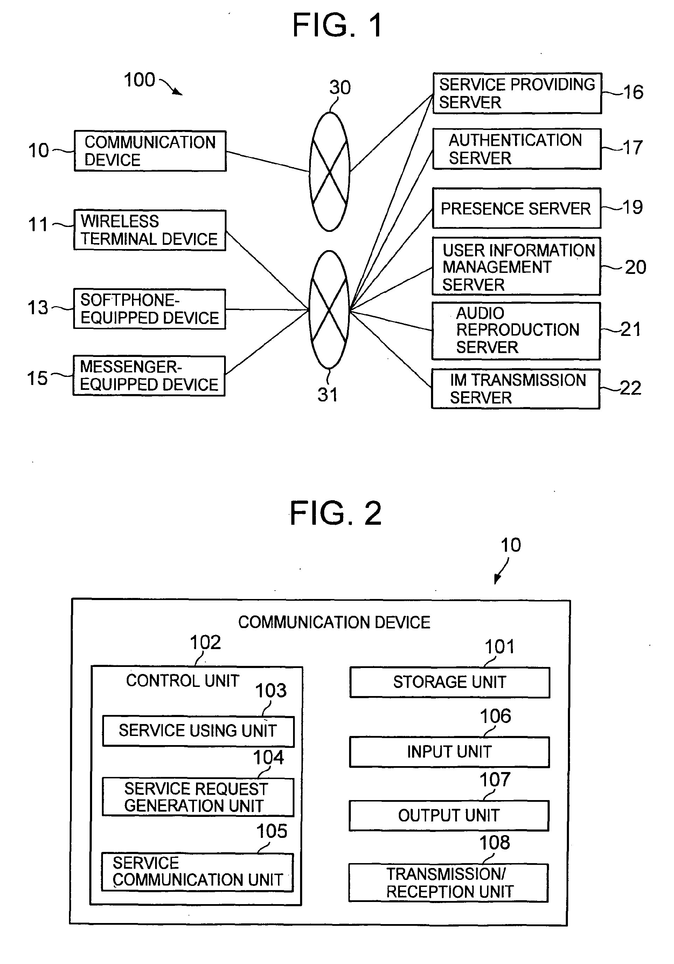

FIG. 1 is a schematic diagram of an authentication system 100 according to an embodiment of the present invention.

As illustrated, the authentication system 100 includes a communication device 10, a wireless terminal device 11, a softphone-equipped device 13, a messenger-equipped device 15, a service providing server 16, an authentication server 17, a presence server 19, a user information management server 20, an audio reproduction server 21, and an IM transmission server 22.

Then, the communication device 10 and the service providing server 16 are configured to mutually transmit and receive information via a first network 30, and the wireless terminal device 11, the softphone-equipped device 13, the messenger-equipped device 15, the service providing server 16, the authentication server 17, the presence server 19, the user information management server 20, the audio reproduction server 21, and the IM transmission server 22 are configured to mutually transmit and receive information via a second network 31.

On this occasion, it is not necessary for the first network 30 and the second network 31 to be physically different from each other, but a communication path for the information transmitted and received between the communication device 10 and the service providing server 16 and a communication path for the information transmitted and received among the wireless terminal device 11, the softphone-equipped device 13, the messenger-equipped device 15, the service providing server 16, the authentication server 17, the presence server 19, the user information management server 20, the audio reproduction server 21, and the IM transmission server 22 are to be different paths in terms of protocol or transmission medium. Further, it is preferable that the first network 30 and the second network 31 are configured so as not to overlap each other at even a portion except for sections close to the communication device, and thus, a malicious party cannot obtain information flowing through both of the networks at the same time.

Moreover, it is preferable that the second network 31 is a more reliable network than the first network 30.

For example, according to this embodiment, the first network 30 is the Internet which can be accessed by an unspecified number of users, and the second network 31 is a next generation network (NGN) which is provided with a line authentication function, hardly permits malpractices such as modification of communication data and impersonation of a user or a server, and is thus a more reliable network than the first network 30, but the present invention is not limited to this form.

On the second network 31, a plurality of servers such as a proxy-call session control function (P-CSCF), an interrogating-call session control function (I-CSCF), and a serving-call session control function (S-CSCF) relay communication according to the NGN, but the processing on those servers follows the publicly known session initiation protocol (SIP) and IP multimedia subsystem (IMS), and a detailed description thereof is omitted.

FIG. 2 is a schematic diagram of the communication device 10.

As illustrated, the communication device 10 includes a storage unit 101, a control unit 102, an input unit 106, an output unit 107, and a transmission/reception unit 108.

The storage unit 101 stores information necessary for processing carried out on the communication device 10.

The control unit 102 includes a service using unit 103, a service request generation unit 104, and a service communication unit 105.

The service using unit 103 carries out processing of providing a user with an input/output interface for using services via the output unit 107.

The service request generation unit 104 carries out processing of generating a message for requesting the service providing server 16 for a service.

The service communication unit 105 controls transmission/reception processing for information via the transmission/reception unit 108 and the first network 30. For example, the service communication unit 105 can be a protocol stack or the like enabling hyper text transfer protocol (HTTP) communication for using Web sites and Web services.

The input unit 106 receives an input of information.

The output unit 107 outputs information.

The transmission/reception unit 108 transmits/receives information via the first network 30.

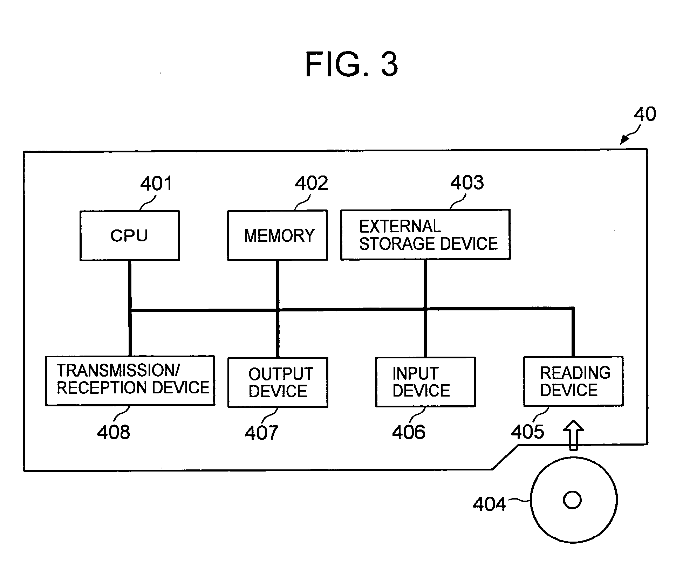

The above-mentioned communication device 10 can be realized by, for example, a general computer 40 illustrated in FIG. 3 (schematic diagram of the computer 40) including a central processing unit (CPU) 401, a memory 402, an external storage device 403 such as a hard disk drive (HDD), a reading device 405 which reads information from a portable recording medium 404 such as a compact disk read only memory (CD-ROM) and a digital versatile disk read only memory (DVD-ROM), an input device 406 such as a keyboard or a mouse, an output device 407 such as a display, and a transmission/reception device 408 such as a network interface card (NIC) used to couple to a communication network.

For example, the storage unit 101 may be realized by causing the CPU 401 to use the memory 402 or the external storage device 403, the control unit 102 may be realized by loading a predetermined program stored in the external storage device 403 to the memory 402, and causing the CPU 401 to execute the program, the input unit 106 may be realized by causing the CPU 401 to use the input device 406, the output unit 107 may be realized by causing the CPU 401 to use the output device 407, and the transmission/reception unit 108 may be realized by causing the CPU 401 to use the transmission/reception device 408.

The predetermined program may be downloaded to the external storage device 403 from the recording medium 404 via the reading device 405, or from a network via the transmission/reception device 408, may then be loaded on the memory 402, and may be executed by the CPU 401. Moreover, the predetermined program may be directly loaded on the memory 402 from the recording medium 404 via the reading device 405, or from a network via the transmission/reception device 408, and may be executed by the CPU 401.

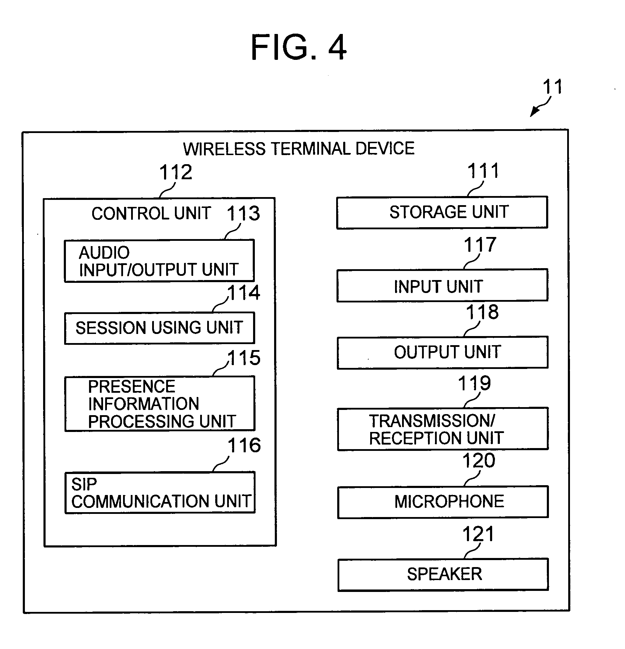

FIG. 4 is a schematic diagram of the wireless terminal device 11.

As illustrated, the wireless terminal device 11 includes a storage unit 111, a control unit 112, an input unit 117, an output unit 118, a transmission/reception unit 119, a microphone 120, and a speaker 121.

The storage unit 111 stores information necessary for processing carried out on the wireless terminal device 11.

The control unit 112 includes an audio input/output unit 113, a session using unit 114, a presence information processing unit 115, and an SIP communication unit 116.

The audio input/output unit 113 receives, via the microphone 120, an input of an audio from a user of the wireless terminal device 11, generates audio data, and outputs the audio data to the session using unit 114 described below. Moreover, the audio input/output unit 113 carries out processing of outputting audio data input from the session using unit 114 as an audio from the speaker 121.

The session using unit 114 carries out input/output processing for audio data in a communication session established according to the SIP via the SIP communication unit 116.

The presence information processing unit 115 carries out processing of monitoring a state of the wireless terminal device 11 (communication state such as online and offline, for example), generating predetermined presence information when the state changes, when a predetermined period of time has elapsed, or when an input of an instruction is received from a user via the input unit 117, and transmitting the generated presence information to the presence server 19 via the SIP communication unit 116.

The SIP communication unit 116 carries out processing of, according to the SIP, transmitting/receiving an SIP message via the transmission/reception unit 119 and the second network 31.

The input unit 117 receives an input of information. The output unit 118 outputs information.

The transmission/reception unit 119, by coupling to an access point (not shown) wirelessly (via electromagnetic wave), transmits/receives information via the second network 31.

The microphone 120 receives an input of audio. The speaker 121 outputs audio.

The above-mentioned wireless terminal device 11 can be realized by coupling a microphone (not shown) and a speaker (not shown) to the computer 40 as illustrated in FIG. 3, for example, and, as the transmission/reception device 408, a wireless LAN device provided with an antenna and a wireless processing device (such as an RF unit, a MAC processing unit, and a baseband processing unit) may be used.

For example, the storage unit 111 may be realized by causing the CPU 401 to use the memory 402 or the external storage device 403, the control unit 112 may be realized by loading a predetermined program stored in the external storage device 403 to the memory 402, and causing the CPU 401 to execute the program, the input unit 117 may be realized by causing the CPU 401 to use the input device 406, the output unit 118 may be realized by causing the CPU 401 to use the output device 407, and the transmission/reception unit 119 may be realized by causing the CPU 401 to use the transmission/reception device 408.

The predetermined program may be downloaded to the external storage device 403 from the recording medium 404 via the reading device 405, or from a network via the transmission/reception device 408, may then be loaded on the memory 402, and may be executed by the CPU 401. Moreover, the predetermined program may be directly loaded on the memory 402 from the recording medium 404 via the reading device 405, or from a network via the transmission/reception device 408, and may be executed by the CPU 401.

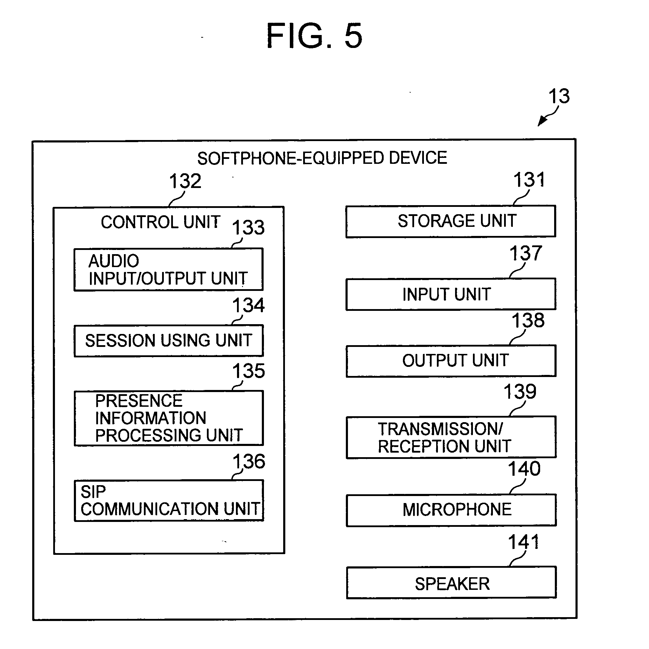

FIG. 5 is a schematic diagram of the softphone-equipped device 13.

As illustrated, the softphone-equipped device 13 includes a storage unit 131, a control unit 132, an input unit 137, an output unit 138, a transmission/reception unit 139, a microphone 140, and a speaker 141.

The storage unit 131 stores information necessary for processing carried out on the softphone-equipped device 13.

The control unit 132 includes an audio input/output unit 133, a session using unit 134, a presence information processing unit 135, and an SIP communication unit 136.

The audio input/output unit 133 receives, via the microphone 140, an input of an audio from a user of the softphone-equipped device 13, generates audio data, and outputs the audio data to the session using unit 134 described below. Moreover, the audio input/output unit 133 carries out processing of outputting audio data input from the session using unit 134 as an audio from the speaker 141.

The session using unit 134 carries out input/output processing for audio data in a communication session established according to the SIP via the SIP communication unit 136.

The presence information processing unit 135 carries out processing of monitoring a state of the softphone-equipped device 13 (communication state such as online and offline, for example), generating predetermined presence information when the state changes, when a predetermined period of time has elapsed, or when an input of an instruction is received from a user via the input unit 137, and transmitting the generated presence information to the presence server 19 via the SIP communication unit 136.

The SIP communication unit 136 carries out processing of, according to the SIP, transmitting/receiving an SIP message via the transmission/reception unit 139 and the second network 31.

The input unit 137 receives an input of information. The output unit 138 outputs information.

The transmission/reception unit 139 transmits/receives information via the second network 31.

The microphone 140 receives an input of audio. The speaker 141 outputs audio.

The above-mentioned softphone-equipped device 13 can be realized by, for example, coupling a microphone (not shown) and a speaker (not shown) to the computer 40 as illustrated in FIG. 3.

For example, the storage unit 131 may be realized by causing the CPU 401 to use the memory 402 or the external storage device 403, the control unit 132 may be realized by loading a predetermined program stored in the external storage device 403 to the memory 402, and causing the CPU 401 to execute the program, the input unit 137 may be realized by causing the CPU 401 to use the input device 406, the output unit 138 may be realized by causing the CPU 401 to use the output device 407, and the transmission/reception unit 139 may be realized by causing the CPU 401 to use the transmission/reception device 408.

The predetermined program may be downloaded to the external storage device 403 from the recording medium 404 via the reading device 405, or from a network via the transmission/reception device 408, may then be loaded on the memory 402, and may be executed by the CPU 401. Moreover, the predetermined program may be directly loaded on the memory 402 from the recording medium 404 via the reading device 405, or from a network via the transmission/reception device 408, and may be executed by the CPU 401.

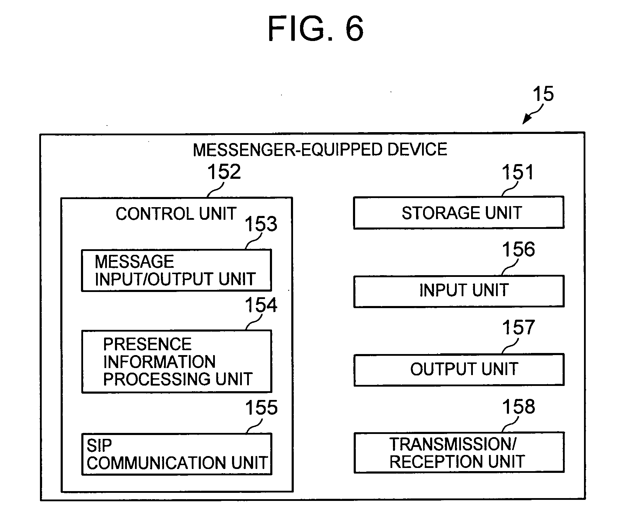

FIG. 6 is a schematic diagram of the messenger-equipped device 15.

The messenger-equipped device 15 includes a storage unit 151, a control unit 152, an input unit 156, an output unit 157, and a transmission/reception unit 158.

The storage unit 151 stores information necessary for processing carried out on the messenger-equipped device 15.

The control unit 152 includes a message input/output unit 153, a presence information processing unit 154, and an SIP communication unit 155.

The message input/output unit 153 carries out processing of receiving an input of text data from the user of the messenger-equipped device 15 via the input unit 156, and outputting the input text data as a MESSAGE request according to the SIP to the SIP communication unit 155. Moreover, the message input/output unit 153 carries out processing of extracting text data from a MESSAGE request input from the SIP communication unit 155, and outputting the text data to the output unit 157.

The presence information processing unit 154 carries out processing of monitoring a state of the messenger-equipped device 15 (online and offline, for example), generating predetermined presence information when the state changes, when a predetermined period of time has elapsed, or when an input of an instruction is received from a user via the input unit 156, and transmitting the generated presence information to the presence server 19 via the SIP communication unit 155.

The SIP communication unit 155 carries out processing of, according to the SIP, transmitting/receiving an SIP message via the transmission/reception unit 158 and the second network 31.

The input unit 156 receives an input of information.

The output unit 157 outputs information.

The transmission/reception unit 158 transmits/receives information via the second network 31.

The above-mentioned messenger-equipped device 15 can be realized by, for example, the computer 40 as illustrated in FIG. 3.

For example, the storage unit 151 may be realized by causing the CPU 401 to use the memory 402 or the external storage device 403, the control unit 152 may be realized by loading a predetermined program stored in the external storage device 403 to the memory 402, and causing the CPU 401 to execute the program, the input unit 156 may be realized by causing the CPU 401 to use the input device 406, the output unit 157 may be realized by causing the CPU 401 to use the output device 407, and the transmission/reception unit 158 may be realized by causing the CPU 401 to use the transmission/reception device 408.

The predetermined program may be downloaded to the external storage device 403 from the recording medium 404 via the reading device 405, or from a network via the transmission/reception device 408, may then be loaded on the memory 402, and may be executed by the CPU 401. Moreover, the predetermined program may be directly loaded on the memory 402 from the recording medium 404 via the reading device 405, or from a network via the transmission/reception device 408, and may be executed by the CPU 401.

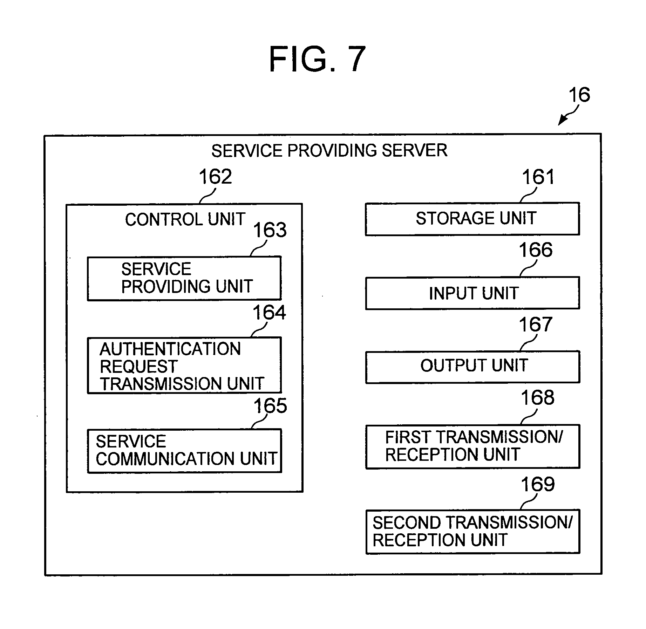

FIG. 7 is a schematic diagram of the service providing server 16.

The service providing server 16 includes a storage unit 161, a control unit 162, an input unit 166, an output unit 167, a first transmission/reception unit 168, and a second transmission/reception unit 169.

The storage unit 161 stores information necessary for processing carried out on the service providing server 16.

The control unit 162 includes a service providing unit 163, an authentication request transmission unit 164, and a service communication unit 165.

The service providing unit 163 carries out processing of providing the communication device 10 with a requested service.

The authentication request transmission unit 164, when the communication device 10 requests for provision of a specific service, carries out processing of transmitting a predetermined authentication request message to the authentication server 17 via the second transmission/reception unit 169 and the second network 31.

The service communication unit 165 carries out processing of, via the first transmission/reception unit 168 and the first network 30, transmitting/receiving information necessary for providing the communication device 10 with a service. For example, the service communication unit 165 can be a protocol stack or the like enabling HTTP communication for providing Web sites and Web services.

The input unit 166 receives an input of information.

The output unit 167 outputs information.

The first transmission/reception unit 168 transmits/receives information via the first network 30.

The second transmission/reception unit 169 transmits/receives information via the second network 31.

The above-mentioned service providing server 16 can be realized by, for example, the computer 40 as illustrated in FIG. 3.

For example, the storage unit 161 may be realized by causing the CPU 401 to use the memory 402 or the external storage device 403, the control unit 162 may be realized by loading a predetermine program stored in the external storage device 403 to the memory 402, and causing the CPU 401 to execute the program, the input unit 166 may be realized by causing the CPU 401 to use the input device 406, the output unit 167 may be realized by causing the CPU 401 to use the output device 407, and the first transmission/reception unit 168 and the second transmission/reception unit 169 may be realized by causing the CPU 401 to use the transmission/reception device 408.

The predetermined program may be downloaded to the external storage device 403 from the recording medium 404 via the reading device 405, or from a network via the transmission/reception device 408, may then be loaded on the memory 402, and may be executed by the CPU 401. Moreover, the predetermined program may be directly loaded on the memory 402 from the recording medium 404 via the reading device 405, or from a network via the transmission/reception device 408, and may be executed by the CPU 401.

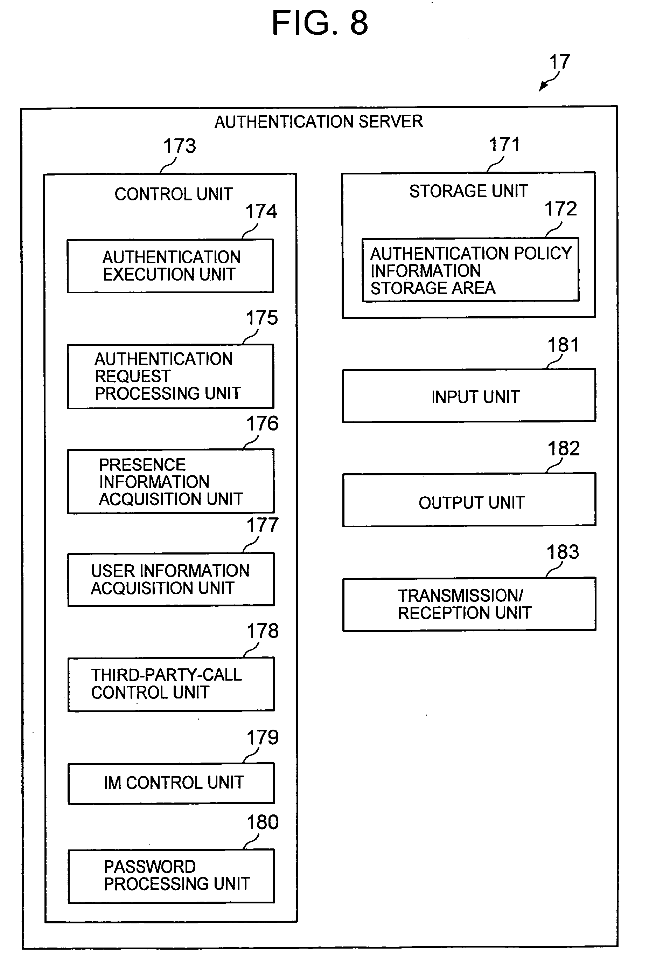

FIG. 8 is a schematic diagram of the authentication server 17.

The authentication server 17 includes a storage unit 171, a control unit 173, an input unit 181, an output unit 182, and a transmission/reception unit 183.

The storage unit 171 includes an authentication policy information storage area 172.

The authentication policy information storage area 172 stores, for the respective service providing servers 16, information for specifying authentication conditions applied to authentication requests received from the service providing servers 16, authentication methods under those authentication conditions and authentication levels under those authentication conditions.

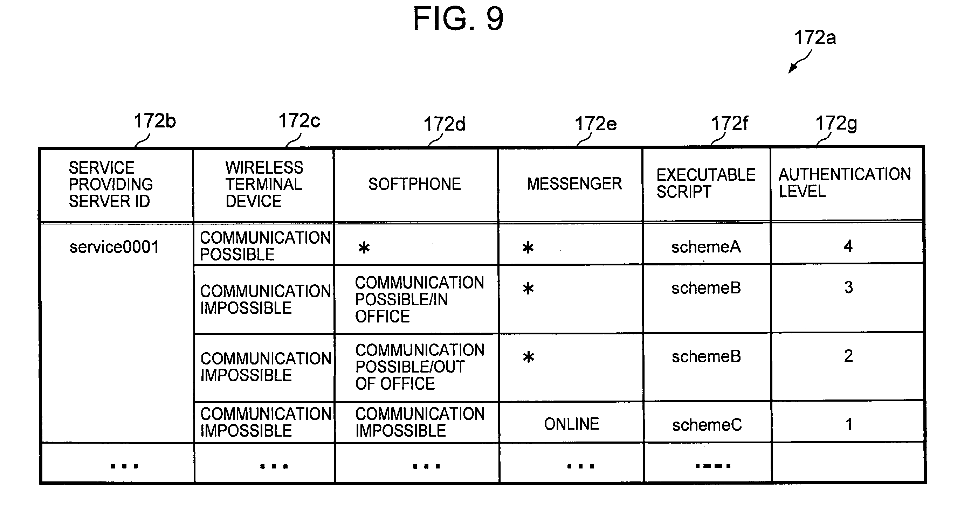

For example, according to this embodiment, an authentication policy table 172a illustrated in FIG. 9 (schematic diagram of the authentication policy table 172a) is stored in the authentication policy information storage area 172.

The authentication policy table 172a includes a service providing server ID column 172b, a wireless terminal device column 172c, a softphone column 172d, a messenger column 172e, an executable script column 172f, and an authentication level column 172g.

The service providing server ID column 172b stores identification information (service providing server ID, in this case) for uniquely specifying a service providing server.

To one service providing server ID, at least one authentication method is associated as a record (row in the table) . An authentication method is constituted as a set of conditions required for selecting this authentication method, an executable script representing actual execution steps, and an authentication level notified to a service providing server upon successful execution.

The wireless terminal device column 172c, the softphone column 172d, and the messenger column 172e store values for defining conditions (conditions relating to presence information of the respective devices) required for selecting the authentication method corresponding to the same record.

Specifically, the wireless terminal device column 172c stores information (presence information) for specifying a state of the wireless terminal device 11. When a sign "*" is stored, it represents an arbitrary state (corresponding to any state).

The softphone column 172d stores information (presence information) for specifying a state of the softphone-equipped device 13. When a sign "*" is stored, it represents an arbitrary state (corresponding to any state).

The messenger column 172e stores information (presence information) for specifying a state of the messenger-equipped device 15. When a sign "*" is stored, it represents an arbitrary state (corresponding to any state).

The executable script column 172f stores steps for executing an authentication method when, to an authentication request received from a service providing server 16 specified by the service providing server ID column 172b, states of respective devices held by a user to be authenticated satisfy presence conditions specified by the wireless terminal device column 172c, the softphone column 172d, and the messenger column 172e. For example, according to this embodiment, the executable script column 172f stores names of executable scripts and information for specifying the scripts to be actually executed as an authentication method.

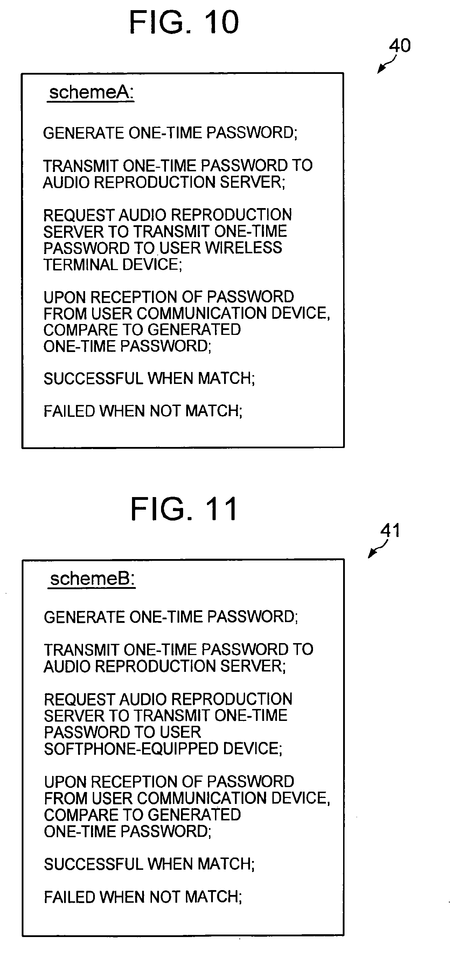

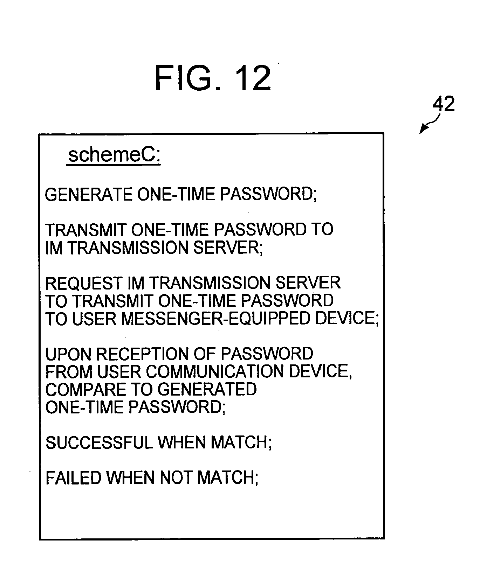

On this occasion, FIG. 10 (schematic diagram of a script 40) illustrates the script 40 specified by a name "schemeA" in the executable script column 172f. FIG. 11 (schematic diagram of a script 41) illustrates the script 41 specified by a name "schemeB" in the executable script column 172f. FIG. 12 (schematic diagram of a script 42) illustrates the script 42 specified by a name "schemeC" in the executable script column 172f. Those scripts are stored in the executable script column 172f of corresponding records.

Referring again to FIG. 9, the authentication level column 172g stores information for specifying an authentication level (strength of authentication) when, to the authentication request from the service providing server 16 specified by the service providing server ID column 172b, the states of the respective devices held by the user to be authenticated satisfy the presence conditions specified by the wireless terminal device column 172c, the softphone column 172d, and the messenger column 172e, and the authentication specified by the executable script column 172f has been carried out.

On this occasion, according to this embodiment, as the value of the authentication level stored in the authentication level column 172g becomes larger, the strength of the authentication of the authentication method specified by the same record becomes higher. According to this embodiment, the authentication method "schemeA" is defined as a method with the highest authentication strength, and the authentication method "schemeC" is defined as a method with the lowest authentication strength.

The authentication policies stored in the authentication policy table 172a are defined on the respective service providing servers 16, and are stored, before the authentication of users, in the authentication policy table 172a. As a method for registering the authentication policies, a Web application or a Web service published by the authentication server 17 to the service providing servers 16 may be used, or, based on a notice in writing, a notice by an electronic mail, or the like transmitted from the service providing server 16 to the authentication server 17, the authentication server 17 may carry out registration processing, but the method is not limited thereto.

The control unit 173 includes an authentication execution unit 174, an authentication request processing unit 175, a presence information acquisition unit 176, a user information acquisition unit 177, a third-party-call control unit 178, an IM control unit 179, and a password processing unit 180.

The authentication execution unit 174 selects an authentication method from the authentication policy table 172a, and carries out authentication according to an executable script corresponding to the selected authentication method.

The authentication request processing unit 175 carries out processing of receiving an authentication request message from the service providing server 16.

The presence information acquisition unit 176 carries out processing of acquiring presence information on at least one of the wireless terminal device 11, the softphone-equipped device 13, and the messenger-equipped device 15 from the presence server 19.

The user information acquisition unit 177 carries out processing of acquiring, from the user information management server 20, a communication ID (identifier required for carrying out communication, such as a phone number, an IP address, and an SIP-URI) of at least one of the wireless terminal device 11, the softphone-equipped device 13, and the messenger-equipped device 15 of a user to be authenticated.

The third-party-call control unit 178 carries out processing of establishing a communication session according to the SIP between the wireless terminal device 11 or the softphone-equipped device 13 and the audio reproduction server 21.

The IM control unit 179 carries out processing of instructing the IM transmission server 22 to transmit an instant message to the messenger-equipped device 15 used by a user to be authenticated.

The password processing unit 180 carries out processing of generating a one-time password according to a method of generating a pseudo-random number or the like, and transmitting the generated one-time password to the audio reproduction server 21 or the IM transmission server 22.

The input unit 181 receives an input of information.

The output unit 182 outputs information.

The transmission/reception unit 183 transmits/receives information via the second network 31.

The above-mentioned authentication server 17 can be realized by, for example, the computer 40 as illustrated in FIG. 3.

For example, the storage unit 171 may be realized by causing the CPU 401 to use the memory 402 or the external storage device 403, the control unit 173 may be realized by loading a predetermined program stored in the external storage device 403 to the memory 402, and causing the CPU 401 to execute the program, the input unit 181 may be realized by causing the CPU 401 to use the input device 406, the output unit 182 may be realized by causing the CPU 401 to use the output device 407, and the transmission/reception unit 183 may be realized by causing the CPU 401 to use the transmission/reception device 408.

The predetermined program may be downloaded to the external storage device 403 from the recording medium 404 via the reading device 405, or from a network via the transmission/reception device 408, may then be loaded on the memory 402, and may be executed by the CPU 401. Moreover, the predetermined program may be directly loaded on the memory 402 from the recording medium 404 via the reading device 405, or from a network via the transmission/reception device 408, and may be executed by the CPU 401.

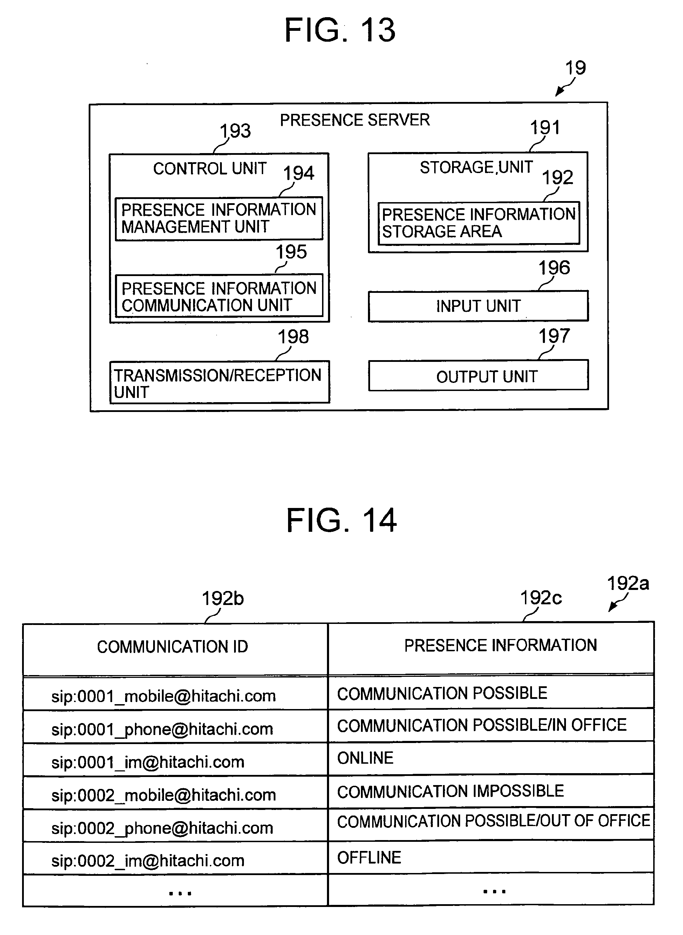

FIG. 13 is a schematic diagram of the presence server 19.

The presence server 19 includes a storage unit 191, a control unit 193, an input unit 196, an output unit 197, and a transmission/reception unit 198.

The storage unit 191 includes a presence information storage area 192.

The presence information storage area 192 stores information (presence information) for specifying a state transmitted from a device on a side of a user to be authenticated.

For example, according to this embodiment, a presence information table 192a illustrated in FIG. 14 (schematic diagram of the presence information table 192a) is stored in the presence information storage area 192.

The presence information table 192a includes a communication ID column 192b and a presence information column 192c.

The communication ID column 192b stores information for specifying a communication ID of devices used by a user such as the wireless terminal device 11, the softphone-equipped device 13, and the messenger-equipped device 15.

The presence information column 192c stores information (presence information) for specifying a state of the device specified by the communication ID column 192b.

Referring again to FIG. 13, the control unit 193 includes a presence information management unit 194 and a presence information communication unit 195.

The presence information management unit 194 carries out processing of receiving presence information via the transmission/reception unit 198 from the wireless terminal device 11, the softphone-equipped device 13, or the messenger-equipped device 15, and storing the received presence information in the presence information table 192a.

The presence information communication unit 195 carries out processing of, in response to a request from the authentication server 17, transmitting presence information on the wireless terminal device 11, the softphone-equipped device 13, or the messenger-equipped device 15 via the transmission/reception unit 198 to the authentication server 17.

The input unit 196 receives an input of information. The output unit 197 outputs information.

The transmission/reception unit 198 transmits/receives information via the second network 31.

The above-mentioned presence server 19 can be realized by, for example, the computer 40 as illustrated in FIG. 3.

For example, the storage unit 191 may be realized by causing the CPU 401 to use the memory 402 or the external storage device 403, the control unit 193 may be realized by loading a predetermined program stored in the external storage device 403 to the memory 402, and causing the CPU 401 to execute the program, the input unit 196 may be realized by causing the CPU 401 to use the input device 406, the output unit 197 may be realized by causing the CPU 401 to use the output device 407, and the transmission/reception unit 198 may be realized by causing the CPU 401 to use the transmission/reception device 408.

The predetermined program may be downloaded to the external storage device 403 from the recording medium 404 via the reading device 405, or from a network via the transmission/reception device 408, may then be loaded on the memory 402, and may be executed by the CPU 401. Moreover, the predetermined program may be directly loaded on the memory 402 from the recording medium 404 via the reading device 405, or from a network via the transmission/reception device 408, and may be executed by the CPU 401.

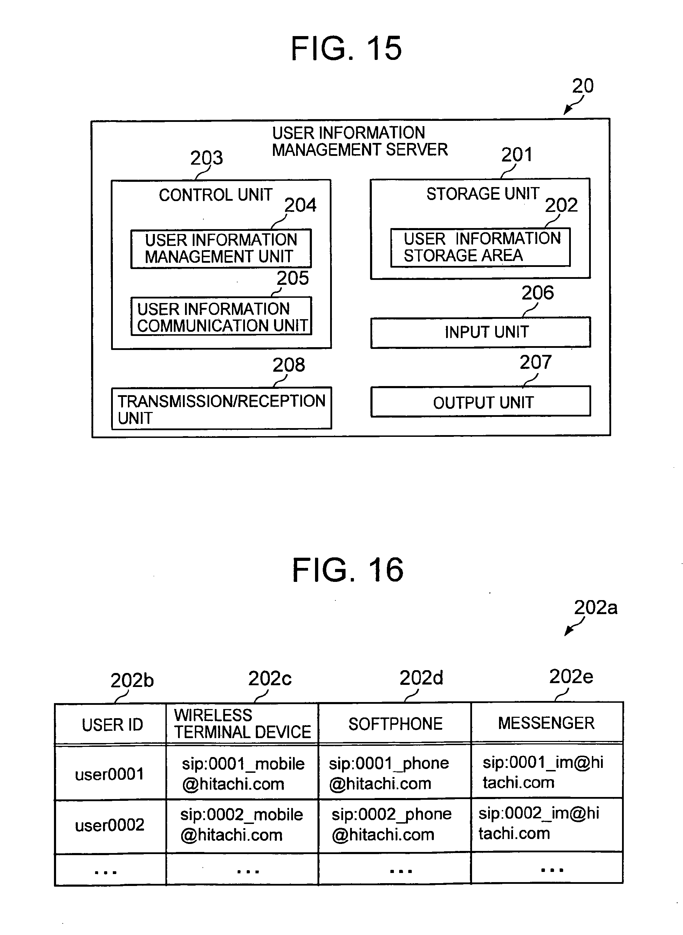

FIG. 15 is a schematic diagram of the user information management server 20.

The user information management server 20 includes a storage unit 201, a control unit 203, an input unit 206, an output unit 207, and a transmission/reception unit 208.

The storage unit 201 includes a user information storage area 202.

The user information storage area 202 stores, for each user to be authenticated, information for specifying communication IDs of devices used by the user.

For example, according to this embodiment, a user information table 202a illustrated in FIG. 16 (schematic diagram of the user information table 202a) is stored in the user information storage area 202.

The user information table 202a includes a user ID column 202b, a wireless terminal device column 202c, a softphone column 202d and a messenger column 202e.

The user ID column 202b stores identification information (user IDs in this case) for uniquely identifying a user in the authentication system 100.

The wireless terminal device column 202c stores information for identifying a communication ID of the wireless terminal device 11 used by the user specified by the user ID column 202b.

The softphone column 202d stores information for identifying a communication ID of the softphone-equipped devices 13 used by the user specified by the user ID column 202b.

The messenger column 202e stores information for identifying a communication ID of the messenger-equipped device 15 used by the user specified by the user ID column 202b.

Referring again to FIG. 15, the control unit 203 includes a user information management unit 204 and a user information communication unit 205.

The user information management unit 204 carries out processing of storing, changing, and deleting communication IDs of the wireless terminal devices 11, the softphone-equipped devices 13, and the messenger-equipped devices 15 in the user information table 202a, and processing of, in response to an instruction from the user information communication unit 205, acquiring communication IDs of devices used by a specified user from the user information table 202a, and outputting the acquired communication IDs to the user information communication unit 205.

The user information communication unit 205 carries out processing of transmitting, in response to a request from the authentication server 17, communication IDs of devices used by a specified user via the transmission/reception unit 208 to the authentication server 17.

The input unit 206 receives an input of information. The output unit 207 outputs information.

The transmission/reception unit 208 transmits/receives information via the second network 31.

The above-mentioned user information management server 20 can be realized by, for example, the computer 40 as illustrated in FIG. 3.

For example, the storage unit 201 may be realized by causing the CPU 401 to use the memory 402 or the external storage device 403, the control unit 203 may be realized by loading a predetermined program stored in the external storage device 403 to the memory 402, and causing the CPU 401 to execute the program, the input unit 206 may be realized by causing the CPU 401 to use the input device 406, the output unit 207 may be realized by causing the CPU 401 to use the output device 407, and the transmission/reception unit 208 may be realized by causing the CPU 401 to use the transmission/reception device 408.

The predetermined program may be downloaded to the external storage device 403 from the recording medium 404 via the reading device 405, or from a network via the transmission/reception device 408, may then be loaded on the memory 402, and may be executed by the CPU 401. Moreover, the predetermined program may be directly loaded on the memory 402 from the recording medium 404 via the reading device 405, or from a network via the transmission/reception device 408, and may be executed by the CPU 401.

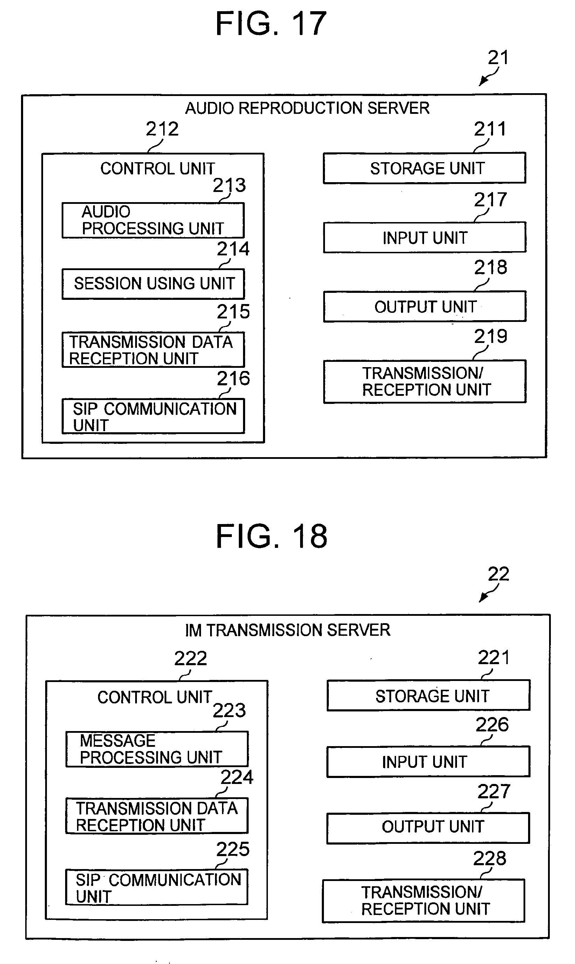

FIG. 17 is a schematic diagram of the audio reproduction server 21.

The audio reproduction server 21 includes a storage unit 211, a control unit 212, an input unit 217, an output unit 218, and a transmission/reception unit 219.

The storage unit 211 stores information necessary for processing carried out on the audio reproduction server 21.

The control unit 212 includes an audio processing unit 213, a session using unit 214, a transmission data reception unit 215, and an SIP communication unit 216.

The audio processing unit 213 carries out processing of converting a one-time password received by the transmission data reception unit 215 via the transmission/reception unit 219 into audio data, storing the audio data in the storage unit 211, and outputting the audio data to the session using unit 214.

The session using unit 214 carries out transmission/reception processing for audio data in a communication session established according to the SIP via the transmission/reception unit 219 between the wireless terminal device 11 or the softphone-equipped device 13.

The transmission data reception unit 215 carries out processing of receiving a one-time password from the authentication server 17.

The SIP communication unit 216 carries out processing of transmitting/receiving an SIP message to/from the wireless terminal device 11 or the softphone-equipped device 13 via the second network 31.

The input unit 217 receives an input of information. The output unit 218 outputs information.

The transmission/reception unit 219 transmits/receives information via the second network 31.

The above-mentioned audio reproduction server 21 can be realized by, for example, the computer 40 as illustrated in FIG. 3.

For example, the storage unit 211 may be realized by causing the CPU 401 to use the memory 402 or the external storage device 403, the control unit 212 may be realized by loading a predetermined program stored in the external storage device 403 to the memory 402, and causing the CPU 401 to execute the program, the input unit 217 may be realized by causing the CPU 401 to use the input device 406, the output unit 218 may be realized by causing the CPU 401 to use the output device 407, and the transmission/reception unit 219 may be realized by causing the CPU 401 to use the transmission/reception device 408.

The predetermined program may be downloaded to the external storage device 403 from the recording medium 404 via the reading device 405, or from a network via the transmission/reception device 408, may then be loaded on the memory 402, and may be executed by the CPU 401. Moreover, the predetermined program may be directly loaded on the memory 402 from the recording medium 404 via the reading device 405, or from a network via the transmission/reception device 408, and may be executed by the CPU 401.

FIG. 18 is a schematic diagram of the IM transmission server 22.

The IM transmission server 22 includes a storage unit 221, a control unit 222, an input unit 226, an output unit 227, and a transmission/reception unit 228.

The storage unit 221 stores information necessary for processing carried out on the IM transmission server 22.

The control unit 222 includes a message processing unit 223, a transmission data reception unit 224, and an SIP communication unit 225.

The message processing unit 223 carries out processing of generating a MESSAGE request according to the SIP containing, in the body, a one-time password received by the transmission data reception unit 224.

The transmission data reception unit 224 carries out processing of receiving a one-time password via the transmission/reception unit 228 from the authentication server 17.

The SIP communication unit 225 carries out processing of transmitting/receiving an SIP message to/from the wireless terminal device 11 or the softphone-equipped device 13 via the second network 31.

The input unit 226 receives an input of information.

The output unit 227 outputs information.

The transmission/reception unit 228 transmits/receives information via the second network 31.

The above-mentioned IM transmission server 22 can be realized by, for example, the computer 40 as illustrated in FIG. 3.

For example, the storage unit 221 may be realized by causing the CPU 401 to use the memory 402 or the external storage device 403, the control unit 222 may be realized by loading a predetermined program stored in the external storage device 403 to the memory 402, and causing the CPU 401 to execute the program, the input unit 226 may be realized by causing the CPU 401 to use the input device 406, the output unit 227 may be realized by causing the CPU 401 to use the output device 407, and the transmission/reception unit 228 may be realized by causing the CPU 401 to use the transmission/reception device 408.

The predetermined program may be downloaded to the external storage device 403 from the recording medium 404 via the reading device 405, or from a network via the transmission/reception device 408, may then be loaded on the memory 402, and may be executed by the CPU 401. Moreover, the predetermined program may be directly loaded on the memory 402 from the recording medium 404 via the reading device 405, or from a network via the transmission/reception device 408, and may be executed by the CPU 401.

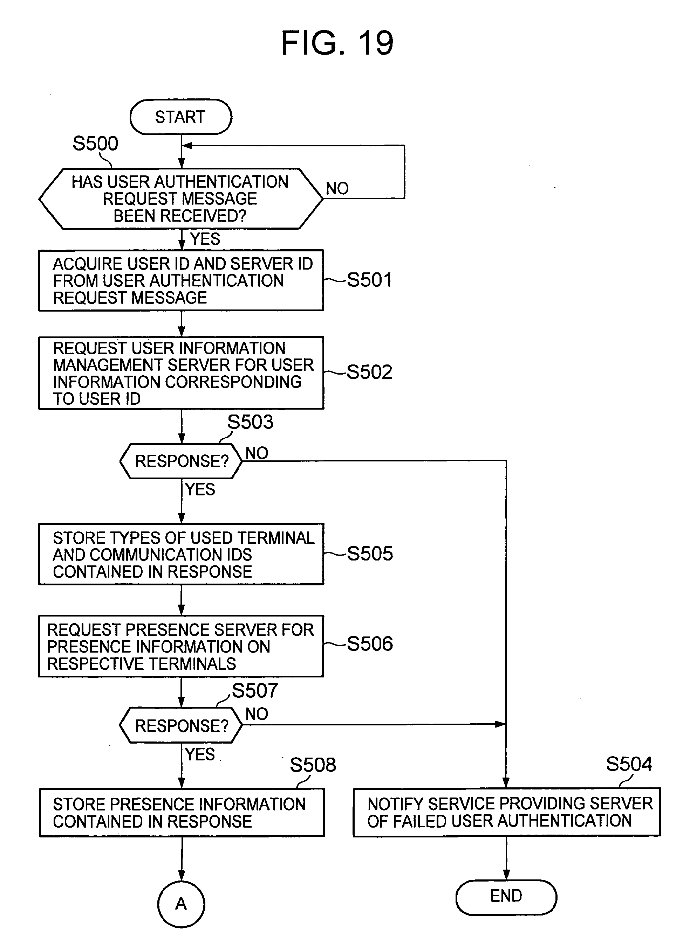

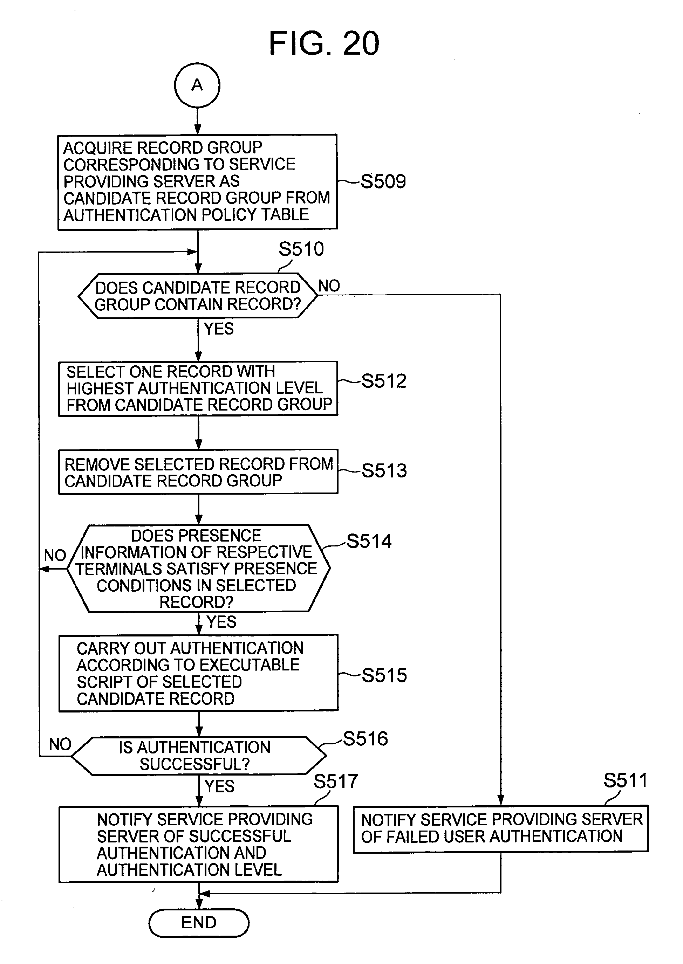

FIG. 19 and FIG. 20 are flowcharts illustrating processing carried out by the authentication server 17.

First, when the authentication request processing unit 175 of the authentication server 17 receives a user authentication request message via the transmission/reception unit 183 ("YES" in Step S500), the authentication request processing unit 175 acquires a user ID and a server ID contained in the received message (S501)*.*

On this occasion, the user authentication request message includes a user ID of a user to be authenticated, a server ID of a service providing server 16 requesting for the authentication, and a message identifier indicating that this is a message requesting for the user authentication.

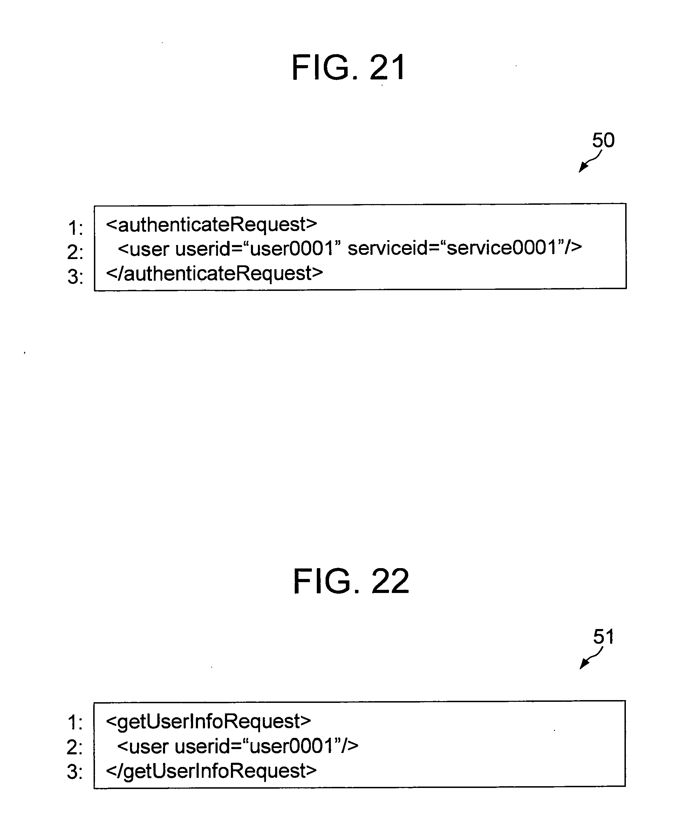

For example, according to this embodiment, as illustrated in FIG. 21 (schematic diagram of a body 50 of a user authentication request message), a simple object access protocol (SOAP) message containing an XML expression in the body 50 is used, but the present invention is not limited to this form. It should be noted that numbers on the left end of FIG. 21 are indexes for specifying line numbers, and do not constitute a part of the body 50.

On this occasion, in the body 50 of the user authentication request message, an authenticateRequest tag indicates that this is a message requesting for user authentication, and "user0001" which is a value of a userid attribute of a user element represents a user ID of a user to be authenticated, and "service0001" which is a value of a serviceid attribute represents a server ID of a service providing server 16 requesting for the authentication.

Referring again to FIG. 19, the user information acquisition unit 177 of the authentication server 17 generates, for the user specified by the user ID acquired in Step S500, a user information request message for acquiring pairs of the type of a used terminal and a communication ID, and transmits the generated message to the user information management server 20 (S502).

On this occasion, the user information request message contains the user ID of the user for whom the user information is to be acquired, and a message identifier indicating that this is a message requesting for acquisition of the user information.

For example, according to this embodiment, as illustrated in FIG. 22 (schematic diagram of a body 51 of a user information request message), a SOAP message containing an XML expression in the body 51 is used, but the present invention is not limited to this form. It should be noted that numbers on the left end of FIG. 22 are indexes for specifying line numbers, and do not constitute a part of the body 51.

In the body 51 of the user information request message, a getUserInfoRequest tag indicates that this is a message requesting for the user information, and "user0001" which is a value of a userid attribute of a user element represents a user ID of a user for whom the user information is to be acquired.

Referring again to FIG. 19, the user information acquisition unit 177 is waiting for reception of a response message in response to the user information request message transmitted in Step S502 (S503), and when the user information acquisition unit 177 has not received the response in response to the user information request message from the user information management server 20 in a predetermined period of time ("NO" in Step S503), the authentication execution unit 174 generates an error message indicating a failure in the authentication process, transmits the error message to the service providing server 16 (S504), and finishes the processing.

On the other hand, when the user information acquisition unit 177 has received a user information response message in the predetermined period of time from the user information management server 20 via the transmission/reception unit 183 ("YES" in Step S503), the user information acquisition unit 177 stores pairs of the type of a device of the user and a communication ID which are contained in the received response message in the storage unit 171 (S505).

On this occasion, the user information response message includes pairs of the type of the terminal of the user and communication ID and a message identifier indicating that this message is a response message in response to the user information request.

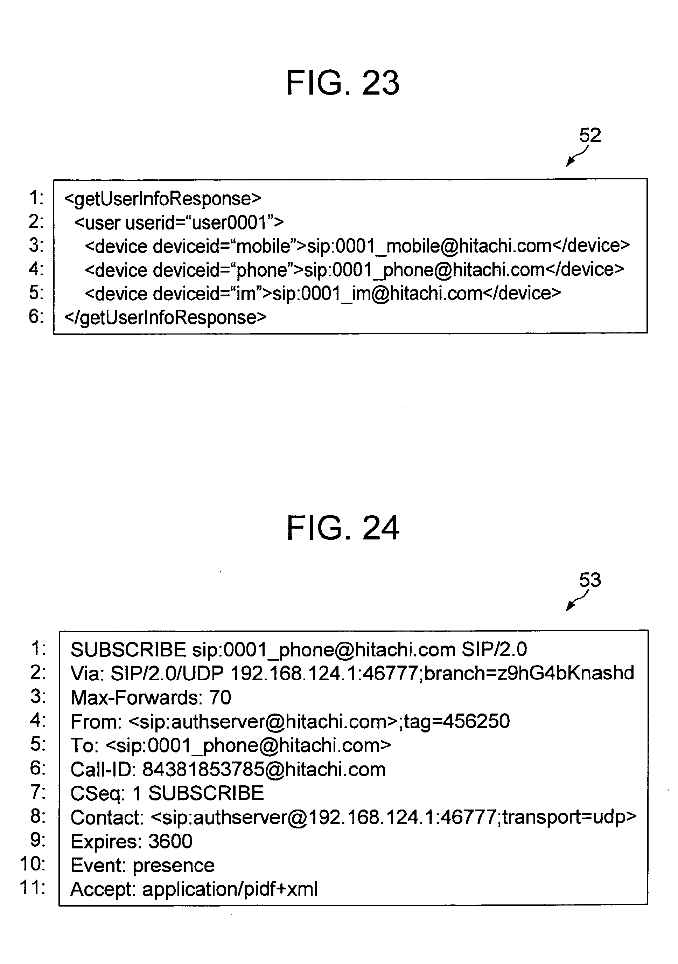

For example, according to this embodiment, as illustrated in FIG. 23 (schematic diagram of a body 52 of a user information response message), a SOAP message containing an XML expression in the body 52 is used, but the present invention is not limited to this form. It should be noted that numbers on the left end of FIG. 23 are indexes for specifying line numbers, and do not constitute a part of the body 52.

In the body 52 of the user information response message, a getUserInfoResponse tag indicates that this is a response message in response to a user information request, and "user0001" which is a value of a userid attribute of a user element represents a user ID of a user who is the subject of the user information. Moreover, values ("mobile", "phone", and "im") of a deviceid attribute of respective device elements indicate which terminal the communication ID of the device element corresponds to, and the value of the respective device elements indicates the communication ID assigned to the terminal. For example, the example illustrated in FIG. 23 represents that the user "user0001" holds a wireless terminal device 11 corresponding to the terminal type "mobile", a softphone-equipped device 13 corresponding to the terminal type "phone", and a messenger-equipped device 15 corresponding to the terminal type "im", and the communication IDs of the respective devices
are "sip:0001 mobile@hitachi.com", "sip:0001_phone@hitachi.com", and "sip:0001_im@hitachi.com".

Referring again to FIG. 19, then, the presence information acquisition unit 176 of the authentication server 17 generates presence information request messages requesting for presence information on all the devices specified by the communication IDs acquired in Step S505, and transmits the generated messages to the presence server 19 (S506).

On this occasion, the presence information request message is a message containing the communication ID of the device used by the user, and a message identifier indicating that this is a message requesting for acquisition of the presence information.

For example, according to this embodiment, the presence server 19 is compliant to the SIP for instant messaging and presence leveraging extensions (SIP/SIMPLE), and, as illustrated in FIG. 24 (schematic diagram of a presence information request message 53), the presence information request message uses the "SUBSCRIBE request" of the SIP message, but the present invention is not limited to this form. It should be noted that numbers on the left end of FIG. 24 are indexes for specifying line numbers, and do not constitute a part of the message.

The presence information request message 53 contains, in a To tag in the fifth line, a communication ID "sip:0001_phone@hitachi.com" which is a communication ID of a softphone-equipped device 13 of a user "user0001", and indicates that this message requests for presence information on a communication device having this communication ID.

Details of the SUBSCRIBE request according to the SIP follow the prescription of the RFC3265, and a detailed description thereof is therefore omitted.

According to this embodiment, a presence information request message 53 is generated for one device, and thus, presence information request messages for requesting for presence information on the wireless terminal device 11 and the messenger-equipped device 15 can also be generated as similar SIP messages.

Moreover, the presence information request message according to this embodiment is not limited to the SUBSCRIBE request according to the SIP, and messages prescribed by various standards, and a message prescribed independently may be used. For example, when the presence server 19 is implemented as a Web service provided with the PresenceConsumer interface according to the Parlay X, the SOAP message or the like, as this message, compliant to the Parlay X specifications may be used.

Referring again to FIG. 19, the presence information acquisition unit 176 is waiting for reception of response messages in response to the presence information request messages transmitted in Step S506 (S507), and when the presence information acquisition unit 176 has not received the responses in response to the presence information request messages from the presence server 19 in a predetermined period of time ("NO" in Step S507), the authentication execution unit 174 generates an error message indicating a failure in the authentication process, and transmits the error message to the service providing server 16 (S504), thereby finishing the processing.

On the other hand, when the presence information acquisition unit 176 has received presence information notification messages in the predetermined period of time from the presence server 19 via the transmission/reception unit 183 ("YES" in Step S507), the presence information acquisition unit 176 acquires pairs of the communication ID and presence information from the presence information notification messages, identifies, based on the pairs of the device and the communication ID stored in Step S505, which device the acquired presence information corresponds to, stores it in the storage unit 171 (S508), and proceeds to Step S509.

On this occasion, the presence information notification message contains the communication ID of the device used by the user, a message identifier indicating that this message is a response message of the presence information, and information specifying a state of the device used by the user (presence information).

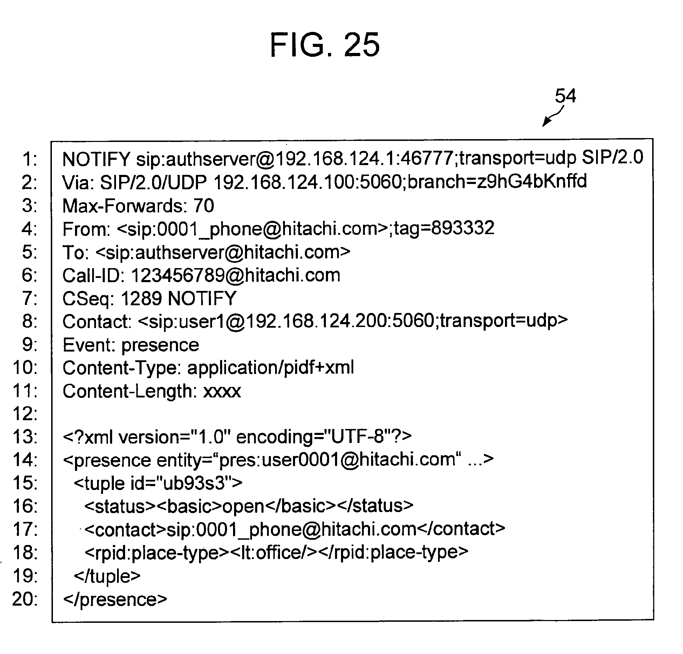

For example, according to this embodiment, the presence server 19 is compliant to the SIP/SIMPLE, and the NOTIFY request according to the SIP is used for the presence information notification message as illustrated in FIG. 25 (schematic diagram of a presence information notification message 54), but the present invention is not limited to this form. It should be noted that numbers on the left end illustrated in FIG. 25 are indexes for specifying line numbers, and do not constitute a part of the message.

The presence information notification message 54 contains, in a From tag in the fourth line, a communication ID "sip:0001_phone@hitachi.com" which is a communication ID of a softphone-equipped device 13 used by a user "user0001", and indicates that this message contains presence information on a device having this communication ID. Moreover, "open" in the 16th line, which is the value of a basic element in a status element, represents that the softphone equipped device 13 is in a state in which the communication is possible, and an lt:office element in an rpid:place-type element in the 18th line represents that the softphone-equipped device 13 is placed in office.

According to this embodiment, one presence information notification message 54 is generated for one device, and, thus, presence information notification messages for notifying presence information on the wireless terminal device 11 and the messenger-equipped device 15 can also be generated as similar SIP messages.

On this occasion, details of the NOTIFY request according to the SIP follow the prescription of the RFC3265, and a detailed description thereof, therefore, is omitted.

It should be noted that the presence information notification message according to the present invention is not limited to the NOTIFY request according to the SIP, and messages prescribed by various standards, and a message prescribed independently may be used. For example, when the PresenceConsumer interface according to the Parlay X is implemented on the presence server 19, and the PresenceNotification interface according to the Parlay X is implemented on the authentication server 17, as this message, the SOAP message compliant to the Parlay X specifications or the like may be used.

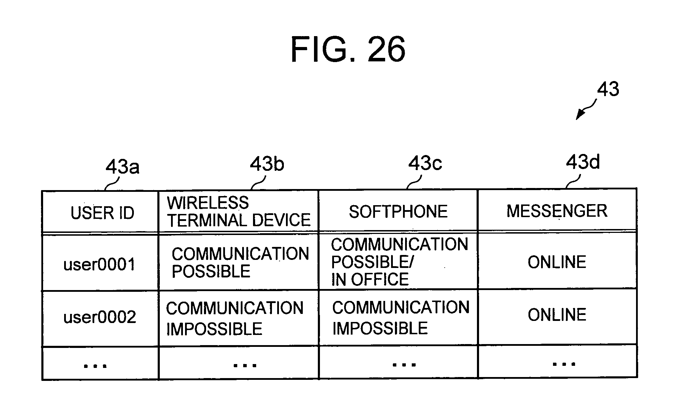

Referring again to FIG. 19, for example, the presence information acquisition unit 176, in Step S508, adds a new record to an acquired presence information table 43 illustrated in FIG. 26 (schematic diagram of the acquired presence information table 43), and stores the acquired presence information in the acquired presence information table 43.

The acquired presence information table 43 includes a user ID column 43a, a wireless terminal device column 43b, a softphone column 43c, and a messenger column 43d.

The user ID column 43a stores information specifying a user ID contained in a presence information notification message.

The wireless terminal device column 43b stores presence information on a wireless terminal device 11 specified by a communication ID contained in the presence information notification message.

The softphone column 43c stores presence information on a softphone-equipped device 13 specified by a communication ID contained in the presence information notification message.

The messenger column 43d stores presence information on a messenger-equipped device 15 specified by a communication ID contained in the presence information notification message.

Referring now to FIG. 20, in Step S509, the authentication execution unit 174 of the authentication server 17 acquires, from the authentication policy table 172a, a group of records in which the server ID acquired in Step S501 is stored in the service providing server ID column 172b, and stores the acquired record group in the storage unit 171 as a "candidate record group".

Then, the authentication execution unit 174 determines whether the candidate record group stored in Step S509 contains records or not (S510), proceeds to Step S511 when records are not contained ("NO" in Step S510), and proceeds to Step S512 when records are contained ("YES" in Step S510).

In Step S512, the authentication execution unit 174 selects a record having the highest authentication level (largest value) of the candidate record group acquired in Step S509.

Then, the authentication execution unit 174 stores the record selected in Step S512 as a "candidate record" in the storage unit 171, and removes the candidate record from the candidate record group (S513).

Then, the authentication execution unit 174 determines whether or not the presence information stored in Step S508 of FIG. 19 satisfies presence conditions specified in the wireless terminal device column 172c, the softphone column 172d, and the messenger column 172e in the candidate record selected in Step S512 (S514). Then, when the presence information satisfies the presence conditions in the candidate record ("YES" in Step S514), the authentication execution unit 174 proceeds to Step S515, and when the presence information does not satisfy the presence conditions ("NO" in Step S514), the authentication execution unit 174 returns to Step S510, and repeats the processing.

In Step S515, the authentication execution unit 174 carries out the authentication by executing an executable script specified by the executable script column 172f in the candidate record.

For example, when the executable script of the specified authentication method is the script 40 illustrated in FIG. 10, the authentication execution unit 174 first causes the password processing unit 180 to carry out processing such as pseudo random number generation thereby generating a one-time password which is hard to predict for a third party. Then, the authentication execution unit 174 transmits the generated one-time password to the audio reproduction server 21, thereby requesting for preparation of audio communication. Then, the third-party-call control unit 178 establishes a communication session for an audio communication between the wireless terminal device 11 and the audio reproduction server 21. On this occasion, details of the establishment of the communication session carried out by the third-party-call control unit 178 follow the prescription of the RFC3725, and a detailed description thereof, therefore, is omitted. After a one-time password converted into an audio form is transmitted from the audio reproduction server 21 to the wireless terminal device 11, when the password processing unit 180 receives a password input by the user via the service providing server 16, the password processing unit 180 compares the received password to the generated one-time password. When the passwords coincide with each other, the password processing unit 180 notifies the authentication execution unit 174 of the successful authentication, and, on the other hand, when the passwords do not coincide with each other, the password processing unit 180 notifies the authentication execution unit 174 of the failed authentication.

Then, the authentication execution unit 174 determines the result of the authentication in Step S515 (S516). When the authentication succeeded ("YES" in Step S516), the authentication execution unit 174 proceeds to Step S517, and when the authentication failed, the authentication execution unit 174 returns to Step S510, and repeats the processing.

In Step S517, the authentication request processing unit 175, in order to notify the result of the user authentication, generates a user authentication response message and transmits the message via the transmission/reception unit 183 to the service providing server 16, thereby finishing the processing.

On this occasion, the user authentication response message transmitted in Step S517 contains the user ID of the user to be authenticated, the server ID of the service providing server 16 which has requested for the authentication, the result of the user authentication, the authentication level of the executed authentication method, and a message identifier indicating that this message is a response message in response to the user authentication request.

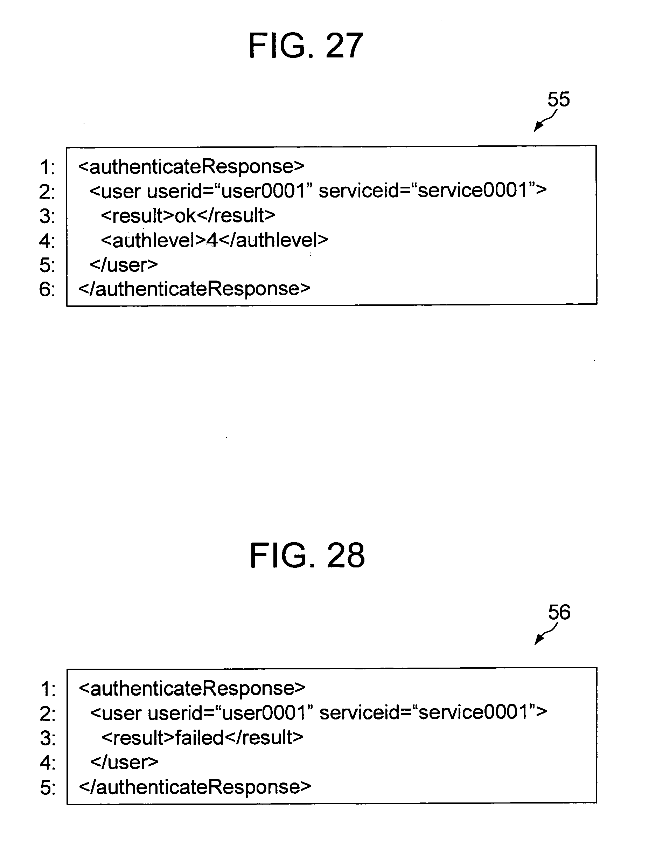

For example, according to this embodiment, as illustrated in FIG. 27 (schematic diagram of a body 55 of a user authentication response message), a SOAP message containing an XML expression in the body 55 is used, but the present invention is not limited to this form.

In the body 55 of the user authentication response message, an authenticateResponse tag indicates that this message is a response message in response to a user authentication request, "user0001" which is a value of a userid attribute of a user element represents a user ID of a user to be authenticated, and "service0001" which is a value of a serviceid attribute represents a server ID of a service providing server 16 requesting for the authentication. Moreover, in the user element, a value "ok" of a result element represents a successful execution of the user authentication, and a value "4" of an authlevel element represents the authentication level (specified in the authentication level column 172g) defined for the executed authentication method.

On the other hand, when the processing from Steps S512 to S516 has been repeated until no record is left in the candidate record group ("NO" in Step S510), the authentication request processing unit 175 proceeds to Step S511, and, in order to notify the failed user authentication, generates a user authentication response message and transmits the user authentication response message to the service providing server 16 in Step S511, thereby finishing the processing.

On this occasion, the user authentication response message transmitted in Step S511 contains the user ID of the user to be authenticated, the server ID of the service providing server 16 which has requested for the authentication, the result of the user authentication, and the message identifier indicating that this message is a response message in response to the user authentication request.

For example, according to this embodiment, as illustrated in FIG. 28 (schematic diagram of a body 56 of a user authentication response message), a SOAP message containing an XML expression in the body 56 is used, but the present invention is not limited to this form.

In the body 56 of the user authentication response message, the authenticateResponse tag indicates that this message is a response message in response to a user authentication request, "user0001" which is a value of the userid attribute of the user element represents a user ID of a user to be authenticated, and "service0001" which is a value of the serviceid attribute represents an ID of a service providing server 16 requesting for the authentication. Moreover, in the user element, a value "failed" of the result element represents a failed execution of the user authentication.

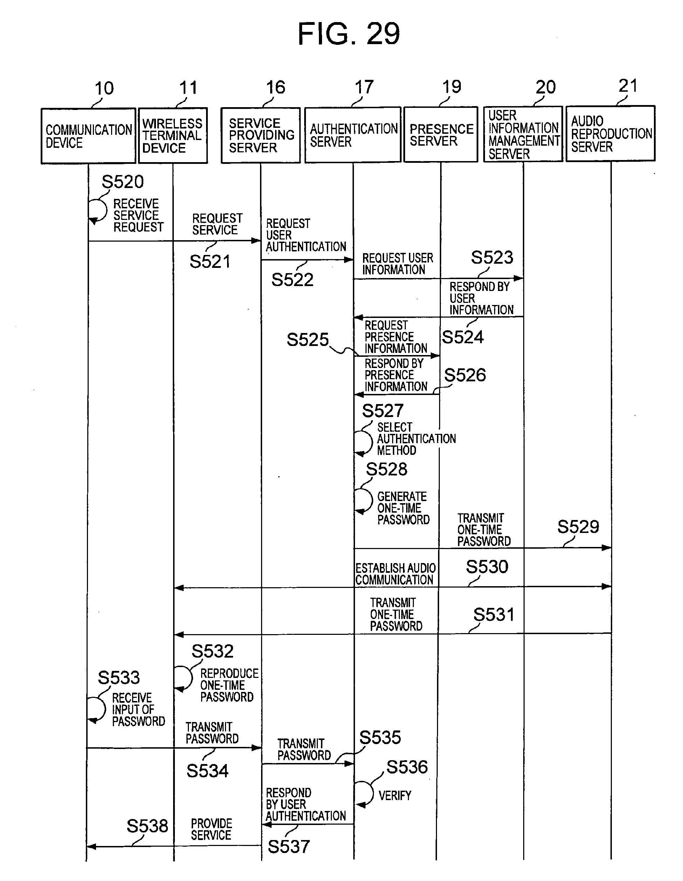

FIG. 29 illustrates a sequence of processing when the authentication system 100 carries out authentication.

The sequence represents processing carried out by the respective devices when a user specified by a user ID "user0001" requests a service providing server 16 to provide a service.

First, when the user of a communication device 10 carries out, via the input unit 106 of the communication device 10, a service request operation for receiving a service provided by the service providing server 16 (S520), the service request generation unit 104 generates a service request message used for requesting the service providing server 16 for the provision of the service, and the service communication unit 105 transmits, via the transmission/reception unit 108, the generated service request message to the service providing server 16 (S521). On this occasion, according to this embodiment, the service request message is described using an HTTP GET request or HTTP POST request and the like, but the present invention is not limited to this form.

In the service providing server 16, when the service communication unit 105 receives, via the first transmission/reception unit 168, the service request message, the service communication unit 105 prompts the user to input the user ID by a method such as transmitting a message requesting for the input of the user ID to the communication device 10, thereby acquiring the user ID "user0001" identifying the user. Then, the authentication request transmission unit 164 generates a user authentication request message used for requesting the authentication of the user, and transmits the generated user authentication message via the second transmission/reception unit 169 to the authentication server 17 (S522).

On this occasion, the user authentication request message is generated as a SOAP message containing the user ID "user0001" of the user, an identifier "service0001" of the service providing server 16, and an XML expression illustrated in the body 50 of the user authentication request message of FIG. 21, or the like.

In the authentication server 17, when the authentication request processing unit 175 receives, via the transmission/reception unit 183, the authentication request message, in order to acquire the identification information (communication ID in this case) of the device used by the user specified by the identifier "user0001" contained in the received authentication request message, the user information acquisition unit 177 generates a user information request message, and transmits the generated user information request message to the user information management server 20 via the transmission/reception unit 183 (S523).

On this occasion, the user information request message is generated as a SOAP message containing the user ID "user0001" of the user, and an XML expression illustrated in the body 51 of the user information request message of FIG. 22, or the like.

In the user information management server 20, when the user information communication unit 205 receives the user information request message via the transmission/reception unit 208, the user information management unit 204 searches the user ID column 202b of the user information table 202a while the identifier "user0001" contained in the received user information request message as a key, and identifies a record storing this identifier. Then, the user information management unit 204 acquires, from the specified record, communication IDs of a wireless terminal device 11, a softphone-equipped device 13, and a messenger-equipped device 15. For example, in the example illustrated in FIG. 16, the user information management unit 204 acquires, as the communication ID of the wireless terminal device 11, "sip:0001_mobile@hitachi.com", as the communication ID of the softphone-equipped device 13, "sip:0001_phone@hitachi.com", and, as the communication ID of the messenger-equipped device 15, "sip:0001_im@hitachi.com". Then, the user information management unit 204 generates a user information response message containing pairs of information specifying the acquired communication ID of the device and information specifying the type of the device, and transmits the user information response message generated by the user information communication unit 205 via the transmission/reception unit 208 to the authentication server 17 (S524).

On this occasion, the user information response message is generated as a SOAP message containing an XML expression illustrated in the body 52 of the user information response message of FIG. 23 or the like.

In the authentication server 17, after the user information acquisition unit 177 receives, via the transmission/reception unit 183, the user information response message, and stores the pairs of the terminal type and the communication ID contained in the received user information response message in the storage unit 171, and the presence information acquisition unit 176 generates, in order to acquire presence information on the devices having the respective stored communication IDs, presence information request messages, and transmits the generated presence information request messages to the presence server 19 via the transmission/reception unit 183 (S525).

On this occasion, the presence information request messages are generated as SIP messages or the like such as the presence information request message 53 illustrated in FIG. 24. The presence information request message 53 illustrated in FIG. 24 is a message requesting for presence information on a softphone-equipped device 13, but presence information request messages are similarly generated for respective devices (wireless terminal device 11 and messenger-equipped device 15) for which the presence information is requested, and are respectively transmitted to the presence server 19.

In the presence server 19, when the presence information communication unit 195 receives, via the transmission/reception unit 198, the presence information request messages, the presence information management unit 194 searches, with the communication IDs contained in the received presence information request messages as keys, the communication ID column 192b of the presence information table 192a, and acquires presence information of the devices holding those communication IDs from the presence information column 192c.

For example, when the presence information request message 53 as illustrated in FIG. 24 is received, the presence information management unit 194 searches the presence information table 192a with the communication ID "sip:0001_phone@hitachi.com" contained in the presence information request message 53 as a key, and acquires "COMMUNICATION POSSIBLE/IN OFFICE" as presence information from the presence information column 192c of a corresponding record.

Then, in the presence server 19, the presence information communication unit 195 generates presence information notification messages containing the presence information acquired as a result of the search, and transmits the generated presence information notification messages, via the transmission/reception unit 198, to the authentication server 17 (S526).

On this occasion, the presence information notification messages are generated as SIP messages (NOTIFY requests) or the like such as the presence information notification message 54 illustrated in FIG. 25. The presence information notification message 54 illustrated in FIG. 25 is a message notifying presence information on a softphone-equipped device 13, but presence information notification messages for notifying presence information on a wireless terminal device 11 and a messenger-equipped device 15 may be similarly generated.

In the authentication server 17, when the presence information acquisition unit 176 receives, via the transmission/reception unit 183, the presence information notification messages, the presence information acquisition unit 176 acquires the presence information on the devices of the user contained in the received presence information notification messages, and stores the acquired presence information in the acquired presence information table 43 as illustrated in FIG. 26.

Then, in the authentication server 17, the authentication execution unit 174 selects an authentication method which the acquired presence information satisfies from the authentication policy table 172a (S527). For example, when the acquired presence information is configured as a record in the second row in the acquired presence information table 43 illustrated in FIG. 26, presence conditions in a record in the second row in the authentication policy table 172a are satisfied, and thus "schemeA" is selected as an executable script of the authentication method from the authentication method column 172f.

Then, according to the script of the selected authentication method, the password processing unit 180 generates a one-time password (S528), and the authentication execution unit 174 adds the generated one-time password to a predetermined message, and transmits, via the transmission/reception unit 183, the predetermined message to the audio reproduction server 21 (S529). In the audio reproduction server 21, the transmission data reception unit 215 receives, via the transmission/reception unit 219, the message containing the one-time password, the audio processing unit 213 converts the received one-time password into an audio form, and stores the converted one-time password in the storage unit 211.

Then, in the authentication server 17, the third-party-call control unit 178 establishes a communication session for an audio communication between the wireless terminal device 11 and the audio reproduction server 21 (S530). This processing follows the SIP, and a detailed description thereof, therefore, is omitted.

Then, in the audio reproduction server 21, the session using unit 214 acquires the one-time password in the audio form from the storage unit 211, and transmits the one-time password to the wireless terminal device 11 of the user via the communication session established by the third-party-call control unit 178 of the authentication server 17 (S531).

When the wireless terminal device 11 receives the one-time password in the audio form via the transmission/reception unit 119, the wireless terminal device 11 reproduces the one-time password, and outputs the password from the speaker 121 (S532).

When the user receives the output of the one-time password, the user inputs the one-time password via the input unit 106 of the communication device 10 (S533).

When the communication device 10 receives the input of the one-time password in this way, the service communication unit 105 transmits the one-time password input by the user to the service providing server 16 (S534).

In the service providing server 16, the service communication unit 165 receives the one-time password via the first transmission/reception unit 168, the service communication unit 105 transfers the received one-time password to the authentication server 17 (S535).

When the authentication server 17 receives the one-time password via the transmission/reception unit 183, the password processing unit 180 compares the received one-time password to the one-time password generated in Step S528 (S536). When those one-time passwords coincide with each other, the authentication request processing unit 175 generates, in order to notify the result of the user authentication, a user authentication response message, and transmits the message via the transmission/reception unit 183 to the service providing server 16 (S537).

On this occasion, the user authentication response message is generated as a SOAP message containing an XML expression as illustrated in the body 55 of the user authentication response message illustrated in FIG. 27 or the like.

In the service providing server 16, when the service communication unit 165 receives, via the second transmission/reception unit 169, the user authentication response message, the authentication request transmission unit 164 verifies the result of the authentication and the authentication level of the executed authentication method contained in the received user authentication response message. Then, when the authentication request transmission unit 164 confirms that information of "ok" indicating successful authentication is contained, the service providing unit 163 provides the communication device 10 with a service corresponding to the confirmed authentication level (level 4 in this case) (S538).

On this occasion, what service is to be provided according to the authentication level received from the authentication server 17 may be set in advance on the service providing server 16.

In other words, for a service provided by the service providing server 16, it is possible to determine a permission to a specific page (screen) according to the authentication level, or to provide a specific service only when a certain authentication level is attained. For example, when the service providing server 16 is a server which provides Internet banking, it is possible, according to the authentication level, to change available transactions (to change extents of transactions (balance inquiry, remittance, withdrawal, and the like) according to the authentication level, or to change the amount of money to be dealt with according to the authentication level).

In the sequence illustrated in FIG. 29, the processing when the one-time password is transmitted from the audio reproduction server 21 to the wireless terminal device 11 is illustrated, and similar processing is carried out when, for example, a one-time password is transmitted from the audio reproduction server 21 to the softphone-equipped device 13.

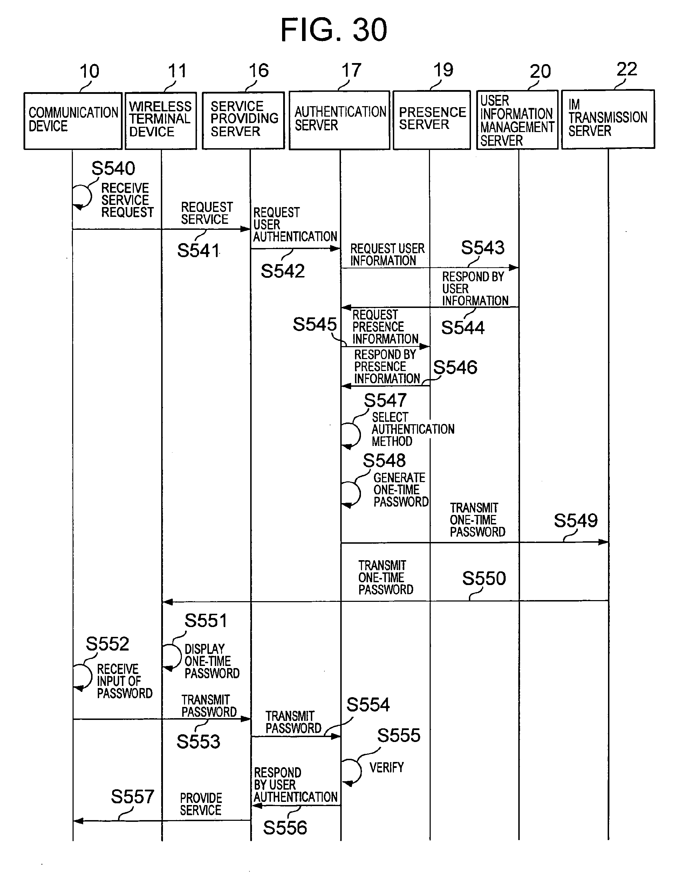

FIG. 30 illustrates a sequence of processing when the authentication system 100 carries out authentication.

This sequence represents processing carried out by the respective devices when a user specified by a user ID "user0002" request a service providing server 16 for providing a service.

First, when the user of the communication device 10 carries out, via the input unit 106 of the communication device 10, a service request operation for receiving a service provided by the service providing server 16 (S540), the service request generation unit 104 generates a service request message used for requesting the service providing server 16 for the provision of the service, and the service communication unit 105 transmits, via the transmission/reception unit 108, the generated service request message to the service providing server 16 (S541). On this occasion, in this embodiment, the service request message is described using the GET request and the POST request of the HTTP and the like, but the present invention is not limited to this form.

In the service providing server 16, when the service communication unit 105 receives, via the first transmission/reception unit 168, the service request message, the service communication unit 10 prompts the user to input the user ID by a method such as transmitting a message requesting for the input of the user ID to the communication device 10, thereby acquiring the user ID "user0002" used for identifying the user. Then, the authentication request transmission unit 164 generates a user authentication request message used for requesting the authentication of the user, and transmits the generated user authentication message via the second transmission/reception unit 169 to the authentication server 17 (S542).

On this occasion, the user authentication request message contains the user ID "user0002" of the user and an identifier "service0001" of the service providing server 16.

In the authentication server 17, when the authentication request processing unit 175 receives, via the transmission/reception unit 183, the authentication request message, in order to acquire the identification information of the device used by the user specified by the identifier "user0002" contained in the received authentication request message, the user information acquisition unit 177 generates a user information request message, and transmits the user information request message to the user information management server 20 via the transmission/reception unit 183 (S543).

On this occasion, the user information request message contains the user ID "user0002" of the user.

In the user information management server 20, when the user information communication unit 205 receives the user information request message via the transmission/reception unit 208, the user information management unit 204 searches the user ID column 202b of the user information table 202a with the identifier "user0002" contained in the received user information request message as a key, and identifies records storing this identifier. Then, the user information management unit 204 acquires, from the specified record, communication IDs of a wireless terminal device 11, a softphone-equipped device 13, and a messenger-equipped device 15.

Then, the user information management unit 204 generates a user information response message containing pairs of information specifying the acquired communication ID and information specifying the type of the device, and transmits the user information response message generated by the user information communication unit 205 via the transmission/reception unit 208 to the authentication server 17 (S544).

In the authentication server 17, after the user information acquisition unit 177 receives, via the transmission/reception unit 183, the user information response message, stores the pairs of the terminal type and the communication ID contained in the received user information response message in the storage unit 171, and the presence information acquisition unit 176 generates, in order to acquire presence information on the devices having the respective stored communication IDs, presence information request messages, and transmits the generated presence information request messages to the presence server 19 via the transmission/reception unit 183 (S545).

In the presence server 19, when the presence information communication unit 195 receives, via the transmission/reception unit 198, the presence information request messages, the presence information management unit 194 searches, with the communication IDs contained in the received presence information request messages as keys, the communication ID column 192b of the presence information table 192a, and acquires presence information on the devices holding those communication IDs from the presence information column 192c.

Then, in the presence server 19, the presence information communication unit 1071 generates presence information notification messages containing the presence information acquired as a result of the search, and transmits the presence information notification messages, via the transmission/reception unit 198, to the authentication server 17 (S546).

In the authentication server 17, when the presence information acquisition unit 176 receives, via the transmission/reception unit 183, the presence information notification messages, the presence information acquisition unit 176 acquires the presence information on the devices of the user contained in the received presence information notification messages, and stores the acquired presence information in the acquired presence information table 43 as illustrated in FIG. 26.

Then, in the authentication server 17, the authentication execution unit 174 selects an authentication method which the acquired presence information satisfies from the authentication policy table 172a (S547). For example, when, for the devices used by the user specified by the user ID "user0002", the presence information of the wireless terminal device 11 is "COMMUNICATION IMPOSSIBLE", the presence information of the softphone-equipped device 13 is "COMMUNICATION IMPOSSIBLE", and the presence information of the messenger-equipped device 15 is "ONLINE", presence conditions of a record in the fifth row of the authentication policy table 172a, which are illustrated in FIG. 9, are satisfied, whereby the authentication execution unit 174 selects "schemeC" as an executable script of the authentication method from the executable script column 172f.

Then, the password processing unit 180 of the authentication server 17 generates a one-time password (S548), and the authentication execution unit 174 transmits a message containing the generated one-time password to the IM transmission server 22 (S549).

In the IM transmission server 22, when the transmission data reception unit 224 receives, via the transmission/reception unit 228, the message containing the one-time password, the message processing unit 223 converts the received one-time password into text data, and stores the text data in the storage unit 221.

Then, the SIP communication unit 225 of the IM transmission server 22 adds the one-time password stored in the storage unit 221 to the body of a MESSAGE request according to the SIP, and transmits the one-time password to the messenger-equipped device 15 (S550).

When the messenger-equipped device 15 receives, via the transmission/reception unit 158, the one-time password in the form of text data, the messenger-equipped device 15, by outputting the received one-time password to the output unit 157, displays the one-time password to the user (S551).

When the user receives the output of the one-time password, the user inputs the one-time password via the input unit 106 of the communication device 10 (S552).

When the communication device 10 receives the input of the one-time password in this way, the service communication unit 105 transmits the one-time password input by the user to the service providing server 16 (S553).

In the service providing server 16, the service communication unit 165 receives the one-time password via the first transmission/reception unit 168, the service communication unit 165 transfers the received one-time password to the authentication server 17 (S554).

When the authentication server 17 receives the one-time password via the transmission/reception unit 183, the password processing unit 180 compares the received one-time password to the one-time password generated in Step S548 (S555). When those one-time passwords coincide with each other, the authentication request processing unit 175, in order to notify the result of the user authentication, generates a user authentication response message, and transmits the message via the transmission/reception unit 183 to the service providing server 16 (S556).

In the service providing server 16, when the service communication unit 165 receives, via the second transmission/reception unit 169, the user authentication response message, the authentication request transmission unit 164 verifies the result of the authentication and the authentication level of the executed authentication method contained in the received user authentication response message. Then, when the authentication request transmission unit 164 confirms that information of "ok" indicating successful authentication is contained, the service providing unit 163 provides the communication device 10 with a service corresponding to the confirmed authentication level (level 1 in this case) (S557). On this occasion, what service is to be provided according to the authentication level received from the authentication server 17 may be set in advance on the service providing server 16.

In the embodiment described above, as the devices for authentication, the wireless terminal device 11, the softphone-equipped device 13, and the messenger-equipped device 15 are used, but the present invention is not limited to this form, and other device may be used. When this other device is used, it is necessary for this other device used for authentication to acquire a one-time password via the second network 31. When this other device in this form is used, the user ID and the communication ID of this other device may be stored in the user information management server 20, and the presence information on this other device may be stored in the presence server 19, and the authentication policy corresponding to this other device may be stored in the authentication server 17. Moreover, in order to transmit a one-time password to this other device, servers other than the audio reproduction server 21 and the IM transmission server 22 may be coupled to the second network 31.

Moreover, in this embodiment, a one-time password is acquired in the devices other than the communication device 10, but the present invention is not limited to this form, and, by providing, on the communication device 10, a transmission/reception unit which can be coupled to the second network 31, it is possible to acquire a one-time password in the communication device 10. When a one-time password is acquired in the communication device 10, the user ID and the communication ID of the communication device 10 may be stored in the user information management server 20, and the presence information on the communication device 10 may be stored in the presence server 19, and the authentication policy corresponding to the presence information of the communication device 10 may be stored in the authentication server 17.

In the embodiment described above, as illustrated in Step S507 and Step S504 of FIG. 19, when a presence information notification message in response to a request for presence information has not been received from the presence server 19 for the predetermined period of time, the user authentication fails. However, the present invention is not limited to this form, and, for example, presence information on a device for which the presence information notification message has not been received is set to "unknown", and the processing may proceed to Step S508. Moreover, when presence information has not been received for the predetermined period of time for all devices used by a user to be authenticated, the processing may proceed to Step S504, and may generate an authentication error, and, when presence information has not been received for a part of the devices, the presence information of the devices for which the presence information has not been received is set to "unknown", and the processing may proceed to Step S508.

Moreover, in the embodiment described above, when the authentication fails for the authentication method executed in Step S515 of FIG. 20 ("NO" in Step S516), the processing returns to Step S510, and selects another authentication method. However, the present invention is not limited to this form, and, when the authentication fails, the processing may repeat the authentication processing of Step S515. In this case, the number of the repetitions of the authentication processing of Step S515 may be determined in advance, and, when this number is exceeded, the processing may return to Step S510, or may decrease the authentication level according to the number of the executed repetitions.

In the embodiment described above, as the servers which carries out the authentication processing, the service providing server 16, the authentication server 17, the presence server 19, the user information management server 20, the audio reproduction server 21, and the IM transmission server 22 are used. However, the present invention is not limited to this form, and it is possible to change the configurations of servers by migrating processing carried out by the respective servers to other servers. For example, by causing the authentication server 17 to carry out processing of all or a part of the other servers, it is possible to reduce the number of the servers.

According to the embodiment described above, as a device which acquires a one-time password on the user side, a cellular phone terminal may be used. In this case, a phone number or a mail address of the cellular phone terminal may be managed as a communication ID in the presence information table 192a and the user information table 202a, the audio reproduction server 21 may make a phone call to the phone number of the cellular phone terminal, thereby reproducing audio data, and the IM transmission server 22 may transmit a mail containing a one-time password to the cellular phone terminal.

The specification and drawings are, accordingly, to be regarded in an illustrative rather than a restrictive sense. It will, however, be evident that various modifications and changes may be made thereto without departing from the spirit and scope of the invention as set forth in the claims.

## Claims

1. An authentication server (17) which authenticates a user to be provided with a service, comprising:
a storage unit (161) stores authentication policy information for specifying an authentication method corresponding to presence information for specifying a state of a device used by the user; and
a control unit (162)
wherein the control unit carries out:
processing of acquiring the presence information for specifying the state of the device used by the user;
processing of specifying the authentication method corresponding to the acquired presence information based on the authentication policy information; and
processing of carrying out authentication according to the specified authentication method.

2. An authentication server according to claim 1, wherein:
the authentication policy information further contains information for specifying an authentication level of the authentication method for each of the authentication methods; and
the control unit carries out, when the authentication is successful, processing of acquiring an authentication level corresponding to a used authentication method based on the authentication policy information, and transmitting an authentication notice containing the acquired authentication level to a service providing server which provides the user with the service.

3. An authentication server according to claim 2, wherein the control unit specifies an authentication method having a highest authentication level of the authentication methods corresponding to the acquired presence information.

4. An authentication server according to claim 1, wherein:
the authentication policy information is for specifying an authentication method corresponding to a combination of the presence information for specifying the states of a plurality of the devices used by the user; and
the control unit specifies the authentication method corresponding to the combination of the presence information for specifying the states of the plurality of the devices used by the user based on the authentication policy information.

5. A program which controls a computer to function as an authentication server which authenticates a user to be provided with a service, the program controlling the computer to function as:
storage unit (161) which stores authentication policy information for specifying an authentication method corresponding to presence information for specifying a state of a device used by the user; and
control unit (162)
the program controlling the control unit to carry out:
processing of acquiring the presence information for specifying the state of the device used by the user;
processing of specifying the authentication method corresponding to the acquired presence information based on the authentication policy information; and
processing of carrying out authentication according to the specified authentication method.

6. A program according to claim 5, wherein:
the authentication policy information further contains information for specifying an authentication level of the authentication method for each of the authentication methods; and
the program controls the control unit to carry out, when the authentication is successful, processing of acquiring an authentication level corresponding to a used authentication method based on the authentication policy information, and transmitting an authentication notice containing the acquired authentication level to a service providing server which provides the user with the service.

7. A program according to claim 6, controlling the control unit to specify an authentication method having a highest authentication level of the authentication methods corresponding to the acquired presence information.

8. A program according to claim 5, wherein:
the authentication policy information is for specifying an authentication method corresponding to a combination of the presence information for specifying the states of a plurality of the devices used by the user; and
the program controls the control unit to specify the authentication method corresponding to the combination of the presence information for specifying the states of the plurality of the devices used by the user based on the authentication policy information.

9. An authentication system, comprising:
a device (10-15) used by a user to be provided with a service via a network; and
an authentication server (17) which authenticates the user,
wherein:
the authentication server comprises:
a storage unit (161) which stores authentication policy information for specifying an authentication method corresponding to presence information for specifying a state of the device; and
a control unit; (162); and
the control unit carries out:
processing of acquiring the presence information for specifying the state of the device;
processing of specifying the authentication method corresponding to the acquired presence information based on the authentication policy information; and
processing of carrying out authentication according to the specified authentication method.

10. An authentication system according to claim 9, wherein the control unit carries out the authentication by transmitting a one-time password to a device determined by the specified authentication method to notify the user of the one-time password, and, by verifying the one-time password transmitted by the user.

11. An authentication system according to claim 10, wherein a network used for transmitting the one-time password is different from the network used for providing the user with the service.

12. An authentication system according to claim 9, wherein:
the authentication policy information further contains information for specifying an authentication level of the authentication method for each of the authentication methods; and
the control unit carries out, when the authentication is successful, processing of acquiring an authentication level corresponding to a used authentication method based on the authentication policy information, and transmitting an authentication notice containing the acquired authentication level to a service providing server which provides the user with the service.

13. An authentication system according to claim 12, wherein the service provided for the user by the service providing server varies according to the authentication level.

14. An authentication system according to claim 12, wherein the control unit specifies an authentication method having a highest authentication level of the authentication methods corresponding to the acquired presence information.

15. An authentication system according to claim 9, wherein:
the authentication policy information is for specifying an authentication method corresponding to a combination of the presence information for specifying the states of a plurality of the devices used by the user; and
the control unit specifies an authentication method corresponding to the combination of the presence information for specifying the states of the plurality of the devices used by the user based on the authentication policy information.

16. An authentication method used in an authentication system comprising:
a device used by a user to be provided with a service via a network; and
an authentication server which authenticates the user,
the authentication server comprising:
a storage unit which stores authentication policy information for specifying an authentication method corresponding to presence information for specifying a state of the device; and
a control unit,
the authentication method comprising:
carrying out, by the control unit, processing of acquiring the presence information for specifying the state of the device;
carrying out, by the control unit, processing of specifying an authentication method corresponding to the acquired presence information based on the authentication policy information; and
carrying out, by the control unit, processing of carrying out authentication according to the specified authentication method.
